# EUROPÄISCHE PATENTSCHRIFT

(11) **EP 2 804 277 B1**
(45) Veröffentlichungstag und Bekanntmachung des Hinweises auf die Patenterteilung: **18.11.2020**
(21) Anmeldenummer: 14168374.8
(22) Anmeldetag: 14.05.2014
(51) Int. Cl.: H02G 3/12

(54) **Unterputzdose für elektrische Anschlüsse**
Flush mounted box for electrical connections
Boîte de branchement pour connexions électriques

(30) Priorität: 14.05.2013 CH 9522013; 16.08.2013 CH 14002013
(43) Veröffentlichungstag der Anmeldung: 19.11.2014
(73) Patentinhaber: Agro AG, 5502 Hunzenschwil (CH)
(72) Erfinder: Albisser, Patrick, 6280 Hochdorf (CH); Brunner, Fabian, 4656 Starrkirch-Wil (CH); Eggenschwiler, Martin, 4714 Aedermannsdorf (CH); Aumiller, Markus, 5502 Hunzenschwil (CH)
(74) Vertreter: Rentsch Partner AG

(56) Entgegenhaltungen:
- EP-A1- 2 555 331
- EP-A2- 2 375 522
- DE-A1- 2 249 951
- JP-A- 2004 187 404
- KR-A- 20090 073 703
- KR-B1- 100 778 289
- KR-B1- 100 848 181

## Beschreibung

Die Erfindung betrifft eine Unterputzdose für elektrische Anschlüsse.

In Bauwerken werden für das Anbringen elektrischer Schalter, Steckdosen, Lampen, Apparate oder für Verzweigungen an den dazu vorgesehenen Stellen im Gebäude Unterputzdosen verwendet, welche häufig einbetoniert werden. Unter Unterputzdosen werden beispielsweise Einlasskästen, Deckendübel, Unterputzabzweigdosen, Verteilerdosen und dergleichen verstanden. Solche Unterputzdosen weisen typischerweise ein zylinder- oder quaderförmiges Gehäuse mit Boden auf, welches einen über eine Bedienöffnung zugänglichen Anschlussraum ausbildet. Umfangsseitig in der Seitenwand oder im Boden weisen sie zudem oft eine Mehrzahl von Muffen und Adaptern auf, welche typischerweise zur Befestigung von Plastikrohren, insbesondere Wellrohren, zur Durchführung von Anschlusskabeln ausgebildet sind.

Der Einbau der Unterputzdose in einer Betonmauer oder -decke erfolgt vor dem Betonieren der Mauer oder der Decke. Dazu wird die Unterputzdose mit Nägeln derart an einem Schalungselement befestigt, dass ihre Bedienöffnung der Schalung zugewandt ist. Typischerweise wird die Bedienöffnung der Unterputzdose vor dem Befestigen mit einem Deckel abgedeckt, um ein Eindringen von flüssigem Beton zu vermeiden.

Es sind auch Unterputzdosen bekannt, die nicht festgenagelt werden müssen. Dazu werden die Unterputzdosen über Montagehilfen z.B. direkt an der Armierung vor dem Anbringen der Schalungselemente an der gewünschten Position befestigt, so dass beim Anbringen der Schalung die Bedienöffnung resp. der Deckel auf der Schalung aufliegt. Ein Problem bei solchen Unterputzdosen besteht darin, dass sie meist nicht für variable Betondeckungen verwendet werden können. Unter Betondeckung wird die Stärke des Betons über der Armierung oder der Abstand der Armierung zur Schalung verstanden.

CH704361 wurde 2011 im Namen von Christoph Eberli publiziert und beschreibt eine verlorene Montagehilfe zur Befestigung einer Unterputzdose an einer Armierung. Die Montagehilfe umfasst ein Metallgitter, das über Haltemittel in Form von freien umgebogenen Drahtenden des Metallgitters mit der Seitenwand der Unterputzdose verbunden ist. Dazu weist die Unterputzdose einen umlaufenden Kragen mit Öffnungen auf, in welche die freien Enden eingesteckt werden. Die Unterputzdose ist im Wesentlichen mittig im Metallgitter angeordnet. Die Montage der Unterputzdose im Metallgitter braucht Fingerspitzengefühl und ist zeitaufwendig. Zudem wird das Anschliessen von Plastikrohren an den Muffen und Adaptern durch das um die Unterputzdose angeordnete umlaufende Metallgitter behindert.

DE2249951 wurde 1972 im Namen von Günther Spelsberg KG publiziert und beschreibt eine Halterung zum Einbau von Unterputzdosen in Betonbauteile. Die Halterung umfasst eine aus Blech gestanzte Kuppelschiene und zwei Stützstangen. Die Kuppelschiene, die mindestens eine Seitenwand der Unterputzdose umgreift, verhindert eine Verschiebung parallel zur Oberfläche des Bauteils. Um zu gewährleisten, dass die Dose einseitig satt gegen eine Schalung anliegt, sind der Dose zwei Stützstangen angefügt, die unmittelbar oder unter Vermittlung eines Drucckörpers gegen die Innenseite der Schalung an der anderen Seite anliegen. Dabei kann die Dose für unterschiedliche Betondeckungen verwendet werden. Je nach Wandstärke müssen allerdings verschieden lange Stützstangen oder verschieden grosse Druckkörper eingesetzt werden. Zudem wird das Anbringen von seitlichen Anschlussrohren durch die Kuppelschiene behindert.

DE102005051596 wurde 2007 im Namen von Herbert Wintersteiger publiziert und beschreibt eine im Wesentlichen zylindrische Unterputzdose mit einer angeformten Montagehilfe zur Befestigung der Unterputzdose an einer Armierung. Die Montagehilfe umfasst zwei seitlich abstehende umlaufende Stege mit einer Durchbrechung im Mittenbereich, die jeweils an gegenüberliegenden Seiten der Dose angeordnet sind. Die Unterputzdose kann mittels der Montagehilfe beispielsweise durch Draht, Klebeband, Kabelbinder oder dergleichen an der Armierung befestigt werden. Die Montagehilfe ist aussermittig an der Unterputzdose angeordnet, so dass sie für zwei verschiedene Betondeckungen verwendet werden kann. Dabei müssen jedoch Deckel und Boden als mögliche Bedienöffnung ausgestaltet sein. Hingegen können grosse Verteilerdosen, welche einen festen Boden aufweisen, nur für eine vorbestimmte Betondeckung verwendet werden. Unter Betondeckung wird die Stärke des Betons über der Armierung (d.h. der Abstand der Armierung zur Schalung) verstanden. Je nach Anordnung der Dose sind die Durchführungsstellen in der Seitenwand aufgrund der Montagehilfe schlecht zugänglich, so dass ein Anschliessen von Anschlussrohren erschwert ist.

EP2375522 wurde 2011 im Namen von Kaiser GmbH & Co. KG publiziert und beschreibt eine im Wesentlichen zylindrische Unterputzdose mit seitlich angeordneter Montagehilfe. Die Montagehilfe umfasst zwei seitlich abstehende, umlaufende Stege mit einer Durchbrechung im Mittenbereich. In der Durchbrechung ist ein Klemmarm angeordnet, mittels welchem die Unterputzdose zur schnellen Montage an der Armierung festgeklemmt werden kann. Auch diese Dose kann durch die aussermittige Anordnung der Montagehilfe für zwei unterschiedliche Betondeckungen verwendet werden, indem nach dem Einbetonieren sowohl der Deckel als auch der Boden für die Bedienöffnung geöffnet werden kann.

FR2942688 wurde 2010 im Namen von KP1 Société par actions simplifiée publiziert und beschreibt eine Unterputzdose mit einem Halteelement zur Befestigung der Unterputzdose an einer Armierung. Das Halteelement ist bandförmig und flexibel ausgebildet. Mit einem Ende ist es über eine Klammer an einer Armierung befestigbar. Das andere Ende ist über ein Rastelement - ähnlich wie bei Kabelbinder - am umlaufenden Rand an der Rückseite der Unterputzdose befestigt. Zur Fixierung der Unterputzdose werden die Halteelemente über die Rastelemente festgezogen und die Dose wird dadurch gegen ein zuvor angebrachtes Schalungsbrett gedrückt. Die Fixierung der Unterputzdose kann daher erst nach Anbringen der Schalung erfolgen.

EP2028740 wurde 2009 im Namen von Kaiser GmbH & Co KG publiziert und beschreibt eine zylindrische Unterputzdose für elektrische Installationen, die äusserst formstabil ist und sich beim Eingipsen in einer Ausnehmung einer Wand nicht verformt. Zur Positionierung der Dose in der Ausnehmung kann ein Klemmbügel mit einem ringartigen Halteteil auf die Dose aufgeschoben werden.

DE8707556U1 wurde 1987 im Namen von Kaiser GmbH & Co KG publiziert und beschreibt eine Unterputzdose für elektrische Installationseinrichtungen, wie Schalter, Steckdosen, Kabelabzweigungen oder dergleichen mit Halte- und/oder Abstützeinrichtungen zum Festlegen der Unterputzdose an den Begrenzungswandungen einer Ausnehmung oder eines Durchbruches einer Wand. Dazu weist die Unterputzdose angeformte, abbiegbare Haltelaschen auf, mit welchen die Unterputzdosen in einer Ausnehmung festgeklemmt wird. Zur Befestigung an z.B. Armierungen vor dem Einbetonieren sind die Dosen nicht geeignet, da die abbiegbaren Haltelaschen keine Fixierung der Dose erlauben.

WO2005109587 wurde 2005 im Namen von Paolo Scaramella publiziert und beschreibt eine Dose, welche ebenfalls in Aussparungen in Wänden eingesetzt wird. Die Dose weist eine im Wesentlichen rechteckige Form mit vier Seitenwänden auf. In den Ecken der Dose sind am oberen Rand in der Nähe der Bedienöffnung schräg nach aussen abstehende Befestigungsarme vorgesehen, mit welchen die Dose z.B. über Schraubverbindungen an der Wandoberfläche befestigt wird, so dass die Dose in der Aussparung der Wand zu liegen kommt.

Eine Aufgabe der Erfindung ist es, eine Unterputzdose zu zeigen, welche die dem Stand der Technik anhaftenden Probleme vermeidet.

Eine erfindungsgemässe Unterputzdose nach Anspruch 1 (fortan Dose) weist ein Gehäuse mit einer oder mehrerer Bedienöffnungen auf. Die Bedienöffnungen können mit einem angeformten oder nachträglich aufgesetzten Deckel verschlossen sein. Das Gehäuse weist in der Regel einen Boden und je nach Ausgestaltung eine oder mehrere entlang diesem umlaufend angeordnete Seitenwände auf. Das Gehäuse, bzw. die Seitenwände weisen in einer bevorzugten Ausführungsform einen eckigen, bzw. einen rechteckigen Querschnitt auf. Je nach Ausführungsform sind aber auch runde Querschnitte denkbar, welche z.B. durch eine einzige Seitenwand gebildet werden.

Mindestens eine Seitenwand kann eine oder mehrere Rohreinführungen aufweisen, welche zum Anschliessen eines oder mehrerer Gliederrohre mit gleichem oder unterschiedlichem Durchmesser an die Dose geeignet sind.

Zumindest in einem Bereich, z.B. einer Ecke des Querschnittes, können innerhalb oder ausserhalb des Querschnittes Öffnungen vorgesehen sein, welche zum Durchstecken von Nägeln geeignet sind, mittels denen die Dose auf einer Verschalung alternativ befestigt werden kann. In einer Ausführungsform sind die Öffnungen ausserhalb des Querschnittes angeordnet, z.B. indem sie in Hülsen integriert sind, welche entlang der Ecken der Dose verlaufen.

Weiterhin weist die Dose Kupplungsmittel zum stabilen Befestigen von einem oder von mehreren Halteelementen auf. Im montiertem Zustand stehen die Halteelemente seitlich ab und dienen zur Befestigung der Dose z.B. an einer Armierung. Erfindungsgemäss werden Unterputzdose und Halteelemente direkt über das Kupplungsmittel lösbar wirkverbunden sein. In Ergänzung können die Kupplungsmittel einen Adapter umfassen, der an einer Unterputzdose befestigbar ist. Das Halteelement ist dann über einen Adapter mit der Unterputzdose wirkverbindbar. In einer Ausführungsform dienen speziell angeordnete Rohreinführungen als Kupplungsmittel zum Anschliessen eines Halteelements, bzw. zum Befestigen eines Adapters. In einer anderen Ausführungsform kann ein Adapter jeweils in eine von mehreren bestehende Sollbruchstellen oder Öffnungen für Nagelbefestigungen, welche jeweils bodenseitig in den Ecken einer Dose angeordnet sind, eingreifen. Die Adapter dienen als Anpassungselement, um Halteelemente einer bestimmten Ausgestaltung mit unterschiedlichen Dosen wirkverbinden zu können. Die Kupplungsmittel sind in der Regel derart ausgestaltet, dass die Halteelemente lösbar mit der Unterputzdose wirkverbindbar sind.

Die Kupplungsmittel sind mit Vorteil so normiert, dass je nach Bedarf unterschiedliche Halteelemente mit der Unterputzdose wirkverbunden werden können.

Die abstehenden oder auskragenden Halteelemente sind mit Vorteil in Umfangrichtung versetzt zu den Rohreinführungen angeordnet, derart, dass die Rohreinführungen auch bei montierten Halteelementen frei zugänglich sind.

Sowohl die Dose, die Halteelemente und - falls vorhanden - der oder die Adapter werden erfindungsgemäss durch Spritzgiessen aus einem oder mehreren Kunststoffen hergestellt.

Die Halteelemente dienen in der Regel zum Befestigen einer Dose an einer Armierung bevor die Dose in Beton vergossen wird. Die Halteelemente weisen zu diesem Zweck einen Auflageabschnitt in Form eines Bügels oder eines umlaufenden Stegs oder in Form eines einzelnen Stegs oder zwei parallel verlaufenden Stegen auf, die jeweils zur Auflage auf der Armierung geeignet sind. Je nach Ausführungsform weisen die Bügel oder Stege für eine möglichst hohe Steifigkeit einen H-, U-, V- oder L-förmigen Querschnitt auf. Weiterhin können die Bügel resp. Stege ein- oder beidseitig mit einer Verzahnung oder mit Rillen versehen sein, welche eine exakte Positionierung der Dose auf der Armierung unterstützen und ein ungewolltes Verschieben verhindern.

Bezüglich der Dose können die Halteelemente und/oder die Kupplungsmittel verstellbar ausgestaltet sein. Damit können die Halteelemente bezüglich der Dose ausgerichtet, bzw. ihre Position angepasst werden. Indem die Anordnung der Halteelemente in vertikaler Richtung (senkrecht zur Bedienöffnung der Dose) verstellbar ist, besteht die Möglichkeit, die Dose in vertikaler Richtung bezüglich der Armierung zu verstellen, so dass sie auch bei unterschiedlichen Betondeckungen verwendbar ist.

Um die gleiche Unterputzdose auf einfache Weise für Anwendungen mit unterschiedlicher Betondeckung zu gebrauchen, können das Kupplungsmittel oder das Halteelement derart ausgestaltet sein, dass das Halteelement in mindestens zwei Positionen gegenüber der Unterputzdose befestigbar ist.

Beispielsweise kann der Auflageabschnitt des Halteelements gegenüber dem am Halteelement vorgesehen Teil des Kupplungsmittels aussermittig angeordnet sein, so dass das Halteelement in einer ersten und einer zweiten Position am mit dem am Gehäuse vorgesehenen Teil des Kupplungsmittels befestigbar ist, wobei das Halteelement für die zweite Position um 180 Grad um deren Längsachse gedreht wird. Auf diese Weise kann die Unterputzdose für zwei unterschiedliche Betondeckungen verwendet werden, in dem das Halteelement auf zwei Arten mit unterschiedlichen Abständen zwischen Auflageabschnitt und Bedienöffnung oder Deckel der Unterputzdose an der Unterputzdose befestigt werden kann. Dies ist insbesondere für Unterputzdosen geeignet, welche nur eine Seite für die Bedienöffnung aufweisen.

Um weitere Positionierungen in vertikaler Richtung zu ermöglichen, können am Kupplungsmittel eine Verrastung oder eine Rastzunge vorgesehen sein. Auf diese Weise sind die Halteelemente höhenverstellbar und der Abstand zwischen Auflageabschnitt und Bedienöffnung oder Deckel der Unterputzdose kann individuell an die gewünschte Betondeckung angepasst werden.

Für eine individuelle Höhenverstellbarkeit, d.h. einer Verstellbarkeit in vertikaler Richtung, kann das Kupplungsmittel weiter einen Abstandshalter umfassen, mit welchem wahlweise der Abstand der Halteelemente zur Oberseite (d.h. die Bedienöffnung, der obere umlaufende Rand der Seitenwand oder der Deckel) der Unterputzdose eingestellt werden kann. Der Abstandhalter kann derart ausgebildet sein, dass er vor dem Halteelement auf die Unterputzdose aufgeschoben wird und somit den Abstand des Halteelements zur Oberseite der Unterputzdose vergrössert. Der Abstandhalter kann z.B. auch am Halteelement angeformt sein und je nach Bedarf auf die gewünschte Länge abgeschnitten werden. Dazu könnten Markierungen vorgesehen sein, welche die Stärke der Betondeckung angeben.

Die Kupplungsmittel können beispielweise eine in vertikaler Richtung verlaufende Schiene, vorzugsweise mit einem Hinterschnitt, und eine mit der Schiene komplementäre Nut aufweisen, so dass die Halteelemente durch Aufschieben mit der Unterputzdose wirkverbindbar sind. Z.B. kann das Kupplungsmittel eine Schwalbenschwanzführung aufweisen. Schiene und Nut können dabei an der Unterputzdose respektive am Halteelement oder umgekehrt angeordnet sein.

In einer Ausführungsform ist der an einer Ecke der Dose angeformte Teil des Kupplungsmittels derart ausgestaltet, dass er mit Blick senkrecht auf eine angrenzende Seitenwand an dieser Seite oder Hälfte des Kupplungsmittels keinen Hinterschnitt aufweist. Auf diese Weise können die ohnehin komplizierten Werkzeuge zur Herstellung der Dose im Spritzgussverfahren vereinfacht werden, indem Seitenflächen des Kupplungsmittels einer Entformungsrichtung des Werkzeugs, z.B. senkrecht zu einer Seitenwand, angepasst sind. Mit Blick in Richtung der Diagonalen kann der an einer Ecke der Dose angeformte Teil des Kupplungsmittels einen Hinterschnitt aufweisen, um ein Entfernen des Halteelements in einer Richtung parallel zur Ebene der Bedienöffnung zu verhindern. Anbringen und/oder Entfernen des Halteelements wird über die Führung des Kupplungsmittels oder der Schiene vertikal zur Bedienöffnung ermöglicht, wobei in der Regel das an der Dose angeformte Kupplungsmittel an der zur Bedienöffnung gerichteten Seite einen oberen Anschlag aufweist.

Beispielsweise ist die Schiene an einer Ecke der Dose, z.B. im Bereich der Hülse, oder am Adapter angeformt und weist einen schwalbenschwanzförmigen oder dreieckigen Querschnitt auf. Die Schiene kann dabei als Vollkörper ausgebildet sein oder zwei seitlich abstehende Schenkel aufweisen, welche die Führungs- und Halteflächen der Schwalbenschwanzführung ausbilden. Der Winkel zwischen den beiden Schenkeln resp. den Führungsflächen ist kleiner oder gleich 90 Grad, so dass der Winkel zwischen einer jeweiligen Führungsfläche und deren benachbarter Seitenwand der Dose grösser oder gleich 90 Grad ist. D.h. mit Blick senkrecht auf eine Seitenwand, weist die an die Seitenwand angrenzende Seite der Schiene keinen Hinterschnitt auf. Zur Stabilisierung kann die Schiene als Vollkörper ausgebildet sein oder zwischen den beiden Schenkeln mehrere Querrippen aufweisen. Die Schiene kann über einen Steg an einer Ecke der Dose angeformt sein.

Alternativ kann das Kupplungsmittel eine Schiene mit kreisförmigem, vier- oder sechseckigem Querschnitt und komplementärer Nut aufweisen, wobei die Schiene dosenseitig angeordnet ist. Eine derart geformte Schiene wäre ebenfalls leicht zu entformen. Beispielsweise kann die Schiene in die Hülse zum Durchstecken der Nägel integriert sein. Andere Querschnittsformen sind möglich.

Bei der Montage der Unterputzdose wird diese mit den Halteelementen resp. mit deren Auflageabschnitten z.B. auf eine Armierung gelegt und anschliessend zwischen Armierung und Schalung eingeklemmt, so dass die Oberseite der Unterputzdose (d.h. die Bedienöffnung, der obere umlaufende Rand der Seitenwand oder der Deckel) gegen die Schalung gedrückt wird. Um ein selbstständiges Lösen der Halteelemente von der Unterputzdose und somit ein fehlerhaftes Aufliegen der Unterputzdose an der Schalung zu vermeiden, ist das Halteelement vorzugsweise nur von der Unterseite her auf die Unterputzdose aufschiebbar. Dies kann beispielsweise dadurch erreicht werden, dass die Kupplungsmittel jeweils an der Seite der Unterputzdose einen oberen Anschlag aufweisen, so dass ein Halteelement von der Unterseite her bis zum Anschlag auf die Unterputzdose aufgeschoben werden kann.

Das Kupplungsmittel oder das Halteelement können derart ausgebildet sein, dass die Halteelemente in Umfangsrichtung resp. in einer Ebene parallel zur von der Bedienöffnung aufgespannten Ebene verstellbar oder schwenkbar sind. Andererseits kann auch ein möglicherweise unerwünschtes seitliches Schwenken durch seitlich beim Kupplungsmittel angeordnete Anschläge verhindert werden. Die Anschläge sind vorteilhaft derart ausgestaltet, dass sie mit Blick senkrecht auf eine angrenzende Seitenwand keinen Hinterschnitt aufweist. Wie bereits erläutert, erleichtert eine solche Ausgestaltung den Aufbau der Spritzguss-Werkzeuge.

In der Regel sind die Anschläge durch zwei Schenkel ausgebildet, die beidseits des Kupplungsmittels an der Dose oder am Adapter angeordnet sind. Insbesondere bei an der Dose angeformten Schenkeln ist es vorteilhaft, dass diese derart angeordnet sind, dass der Winkel zwischen dem Schenkel und der jeweilig benachbarten Seitenwand der Dose 90 Grad beträgt, um die Werkzeugherstellung zu vereinfachen - wie bereits oben erläutert.

Weisen die Kupplungsmittel einen an einer Unterputzdose befestigbaren Adapter auf, über welchen mindestens ein Halteelement mit dem Gehäuse der Unterputzdose wirkverbindbar ist, dann ist in der Regel z.B. Schiene und Nut der Kupplungsmittel zwischen Adapter und Halteelement angeordnet. Somit lassen sich die Halteelemente auf einfache Art und Weise durch Wahl eines passenden Adapters an unterschiedliche Unterputzdosen anpassen.

Erfindungsgemäss sind mindestens zwei Halteelemente bei einer Unterputzdose, die in der Regel eine im Wesentlichen rechteckige oder quaderförmige Form mit vier Seitenwänden aufweist, an zwei diagonal gegenüberliegenden Ecken über Kupplungsmittel mit dem Gehäuse der Unterputzdose wirkverbunden.

In einer Ausführungsform weisen die Halteelemente jeweils Befestigungsmittel auf, mittels denen die Dose einfach und schnell an der Armierung befestigt werden kann. Das Befestigungsmittel kann beispielsweise eine beweglich angeordnete Lasche sein, die vorzugsweise gegen die Kraft einer Feder auslenkbar ist.

Die Befestigungsmittel können an den Halteelementen angeformt sein und ein Scharnier aufweisen z.B. in Form eines oder mehrerer angeformter Filmscharniere. Die Filmscharniere können so angeordnet sein, dass sie einen Schnappeffekt aufweisen (Schnappscharnier) oder ein Einrasten zumindest eines Teils des Befestigungsmittels ermöglichen. In einer Ausführungsform weisen die Befestigungsmittel mindestens einen Klemmteil auf, der über eine Scharnieranordnung mit einem oder mehreren Scharnieren, vorzugsweise angeformten Filmscharnieren, mit dem Halteelement wirkverbunden sind. Die Befestigungsmittel, bzw. der oder die Klemmteile liegen vorder Montage in einer Hauptebene der Halteelemente. Nach dem Auflegen der Halteelemente auf einer Armierung können der oder die Klemmteile um die Armierung umgelegt, bzw. umgeklappt werden, so dass die Halteelemente, bzw. die mit diesen verbundene Dose gegenüber der Armierung fixiert wird. An dem umgelegten Teil des Befestigungsmittels können weitere Befestigungsmittel vorgesehen sein, mittels welchen der umgelegte Teil z.B. am nicht umgelegten Teil fixiert werden kann.

Je nach Anwendungsgebiet weist die Dose ein oder mehrere seitlich abstehende Halteelemente auf. Die Halteelemente können unterschiedliche Funktionen und Formen aufweisen. Z.B. kann ein oder können mehrere Halteelemente ausschliesslich zum Abstützen der Dose gegenüber der Armierung dienen. Alternativ oder in Ergänzung kann eine oder können mehrere Halteelemente zum Abstützen und/oder Festklemmen der Dose gegenüber der Armierung oder einem anderen Element (bzw. einer Wand) dienen.

Die Halteelemente weisen bei Bedarf je eine definierte Länge auf, so dass sie z.B. zum Einstellen eines Abstandes gegenüber einer Wand dienen können. Indem die Halteelemente abnehmbar ausgestaltet sind, kann die Dose mit Halteelementen unterschiedlicher Geometrie und Länge bestückt werden.

Die Halteelemente können ein Wirkverbindungsmittel zum Wirkverbinden einer weiteren Unterputzdose und/oder eines weiteren Halteelements aufweisen. Die Halteelemente können so ausgestaltet sein, dass sie zum baukastenartigen Wirkverbinden von mehr als einer Dose dienen können. Bei Bedarf weisen die Halteelemente Rastelemente auf, mittels denen z.B. zwei Halteelemente von zwei benachbarten Dosen miteinander wirkverbunden werden können. Die Rastelemente sind mit Vorteil am distalen (von der Dose fernliegenden) Ende miteinander verbunden. Jedoch können sie auch am proximalen (der Dose naheliegenden) Ende oder einer anderen Stelle angebracht, bzw. verbunden sein. Vorteilhaft an einer proximalen Anbringung ist, dass dadurch selbst bei am distalen Ende gekürzten Halteelementen eine Verbindung möglich bleibt. Solche distale Kürzungen der Halteelemente können beispielsweise zur Anpassung einer Dose an beschränkte Platzverhältnisse verwendet werden, so etwa wenn eine Unterputzdose in einer Säule montiert werden soll. Ein weiterer Vorteil mit Rastelementen verbundener Haltemittel ist zudem die hohe mechanische Stabilität einer solchen Gesamtstruktur. Die Rastelemente können auch über zusätzliche Distanzelemente miteinander verbunden werden, wenn etwa zwei Dosen in einem bestimmten - durch die die Distanzelemente definierten - Abstand voneinander entfernt sein sollen. Solche Distanzelemente stehen dann in Verbindung mit beiden Rastelementen.

Die Halteelemente können zudem Ausnehmungen aufweisen, die eine sichere Befestigung der Halteelemente bzw. Dosen an einer Armierung ermöglichen. So ist es etwa möglich, einen Rödeldraht (Bindedraht) durch eine solche Ausnehmung durchzuführen und anschliessend an einem Armierungsprofil zu befestigen. Vorteilhaft an solchen Ausnehmungen ist insbesondere, dass dadurch auch gekürzte Halteelemente noch zuverlässig an einer Armierung befestigt werden können. Die Ausnehmungen können dafür grundsätzlich jede Form und Anordnung haben, solange sie die mechanische Stabilität des Halteelement nicht überkritisch reduzieren.

In einer Ausführungsform können Halteelemente auch am Gehäuse einer Dose angespritzt werden, etwa durch zwei-Komponenten Spritzguss zweier Hartkunststoffe. Solche Halteelemente können dabei beispielsweise am Verbindungsteil drehbar gelagert sein, wodurch etwa eine exzentrische Befestigung in zwei unterschiedlichen Höhen am Gehäuse befestigt werden kann. In einer Ausführungsform können angespritzte Halteelemente vom Gehäuse abtrennbar sein, beispielsweise durch eine Trenn-, bzw. Sollbruchstelle. In einer Ausführungsform können zusätzlich zu angespritzten Halteelementen auch mit Kupplungsmitteln (z.B. Schwalbenschwanzführungen) befestigte optionale Halteelemente angebracht werden. Diese kann vorteilhaft sein, um einerseits die Güte der Halterung zu erhöhen und andererseits um beispielsweise an bestimmte Arten von Armierungen angepasste Halteelemente verwenden zu können.

Die Halteelemente können jeweils parallel zu der von der Bedienöffnung aufgespannten Ebene gerade oder gekröpft (geknickte, bzw. gebogene) ausgestaltet sein.

Eine Ausführungsform betrifft eine Dose, die sich für die Verwendung mit Halteelementen der beschriebenen Art eignet, jedoch auch als eigenes erfinderisches Konzept betrachtet werden kann. Eine solche Ausführungsform einer Dose hat zudem den Vorteil, dass sie optional auch ohne Flügel verwendet werden kann.

Die Dose kann einen Deckel aufweisen, der in montiertem Zustand nicht vollständig im Innern der Dose versenkt ist, sondern wenigstens abschnittweise auf der die Öffnung des Gehäuse begrenzenden Stirnseite des Gehäuses aufliegt. Die Abdichtung zwischen Gehäuse und Deckel erfolgt dabei zumindest bereichsweise durch aufeinanderliegende Kontaktflächen zwischen dem Deckel und der Stirnseite des Gehäuses. Zusätzlich oder alternativ können auch spezielle Dichtelemente, wie etwa Dichtlippen am Gehäuse und/oder dem Deckel oder elastische Dichtringe für eine solche Dose verwendet werden. Um während dem Betonieren ein Eindringen von Beton zwischen die Schalung und den Deckel einer montierten Dose zu verhindern, kann eine solche Dose auf der zur Schalung gerichteten Seite Dichtelemente aufweisen. Ein solches Dichtelement kann zum Beispiel eine Dichtlippe umfassen, die wenigstens teilweise am Deckel angebracht ist. Teile der die Dose umlaufenden Dichtlippen können auch am Gehäuse angebracht sein. Durch die Anbringung einer Dichtlippe auf der Oberseite eines Deckels liegt nach erfolgter Betonierung, Ausschalung und Entfernung des Deckels die Stirnseite des Gehäuses der Dose wenigstens teilweise nicht direkt auf der Betonoberfläche, was insbesondere für das Anbringen von Verputz vorteilhaft ist.

In einer Variante einer Dose kann diese auf ihrer Innenseite speziell abgerundete Oberflächen (Verrundungen) aufweisen, die als Montagehilfe beim Einziehen von Kabel dienen. Dazu leiten diese gezielt ein eingezogenes Kabel um und biegen es in eine Richtung, die eine bessere Lage im Gehäuse ermöglichen. Insbesondere beim Einbringen von Geräten in eine Dose kann so ein Kabel auf einfache Art und Weise in eine kabel- und geräteschonende Form entlang der Gehäusewände gewickelt werden.

Ein weiterer Aspekt der Erfindung besteht darin, dass mehrere Dosen auf einfache Weise zu einer grösseren Dose kombiniert werden können und auch als eigenes erfinderisches Konzept betrachtet werden kann. Dazu ist es vorgesehen, dass das Gehäuse einer Dose auf wenigstens zwei Seiten abtrennbare Teile der Seitenwände aufweist. Ein solcher Teil kann auch eine ganze Seitenwand umfassen. Bevorzugt sind die Teile als nach aussen gestülpte (konvexe) Kappen ausgebildet. Auf solchen Kappen können auch Muffen oder Rohreinführungen angebracht sein. Beim Entfernen einer Kappe einer ersten Dose entsteht eine Öffnung in der betreffenden Seitenwand. Diese kann mit einer Öffnung einer zweiten Dose mit wenigstens einer entfernten Kappe verbunden werden. Dazu können am Gehäuse im Bereich um die Öffnungen Haltemittel angebracht sein, um eine erste Dose mit einer zweiten Dose zu verbinden und die Ränder der jeweiligen Öffnungen zu kontaktieren. Solche Verbindungen und Kontaktierungen ermöglichen eine betondichte Verbindungsstelle zwischen verschiedenen Dosen. In einer Ausführungsform einer Dose befinden sich zwei Kappen auf gegenüberliegenden Seiten eines Gehäuses, wobei die erste Kappe eine erste Öffnung abdeckt und die zweite Kappe eine zweite Öffnung abdeckt. Die auf den beiden Seiten angebrachten Haltemittel korrespondieren dabei jeweils miteinander, so dass das erste Haltemittel bei der ersten Öffnung einer ersten Dose mit dem zweiten Haltemittel einer zweiten Öffnung einer zweiten Dose korrespondiert. Auf diese Weise können die Öffnungen der beiden Dosen auf einfache Weise sicher verbunden werden. In einer Ausführungsform einer Dose kann ein erstes Haltemittel wenigstens teilweise ein Hintergriff (Kragen) sein und kann das zweite Haltemittel wenigstens teilweise ein gerader Rand sein. Bei einer solchen Anordnung kann zur Verbindung zweier Dosen das erste Haltemittel in das zweite gehängt werden.

Die beiden Kappen können über jeweils eine Trennstelle (Sollbruchstelle) mit dem restlichen Gehäuse verbunden sein. Eine solche Ausführungsform kann beispielsweise einteilig in einem Spritzgussprozess hergestellt werden, wobei die Trennstellen etwa durch eine lokale Verjüngung der Gehäusewand als Dünnstelle ausgebildet sein können. Alternativ oder zusätzlich können die Kappen auch getrennt vom restlichen Gehäuse hergestellt und anschliessend in dieses eingesetzt werden, etwa durch ein Aufstecken oder ein formschlüssiges Aufschnappen.

Ein weiterer Aspekt der Erfindung betrifft einen Deckel, der für eine erfindungsgemässe Dose geeignet ist Ein solcher Deckel weist eine Deckelaussenseite auf, die in montiertem Zustand auf der Aussenseite einer Dose liegt. Ein solcher Deckel verfügt bei Bedarf über einen von der Deckelaussenseite abstehenden Griff, der elastisch federnd in eine Vertiefung in der Deckelaussenseite ausgelenkt werden kann. In einer Ausführungsform ist ein solcher Griff als eine im Wesentlichen halbkreisförmig nach aussen abstehende Lasche ausgebildet. Solche auslenkbare Griffe erlauben einerseits eine unbehinderte Montage einer Dose an einer Schalung. Andererseits bewirkt der Kontakt zwischen Griff und Schalung auch, dass eine Dose auch noch gefunden werden kann, falls sie während dem Betonieren von der Schalung her etwas absinkt, da sich der Griff aufgrund der Federkraft in jedem Fall an der Betonoberfläche abzeichnet.

Alternativ oder in Ergänzung zum Griff weist ein solcher Deckel auf seiner Aussenseite auch eine Dichtlippe auf, die zur Abdichtung des Deckels gegenüber einer Schalung geeignet ist. Eine solche Dichtlippe kann sich wenigstens bereichsweise entlang des Randes der Deckelaussenseite erstrecken. Die Dichtlippe kann geschlossen oder unterbrochen (offen) ausgebildet sein. In einer Ausführungsform ist die Dichtlippe in einem Bereich unterbrochen. Dadurch kann der Deckel von einem Deckel einer an diese Dose angebauten benachbarten Dose in diesem Bereich überlappt werden. Bei einer nicht zusammengebauten Dose kann dieser unterbrochene Bereich der Dichtlippe beispielsweise durch eine am Gehäuse angebrachte Dichtlippe überbrückt werden. Dabei ist es vorteilhaft, wenn eine solche Dichtlippe des Gehäuses an einer Kappe angebracht ist, die zum Verbinden der Dose mit einer zweiten Dose sowieso entfernt werden muss. Eine solche Überlappung der Deckel hat den Vorteil, dass die Deckel für den Zusammenbau mehrere Dosen nicht verändert werden müssen.

Eine Ausführungsform der Erfindung betrifft eine Unterputzdose (Dose) welche ein Gehäuse mit einem Boden und mindestens einer seitlich an den Boden anschliessenden Seitenwand umfasst. Weiterhin ist ein seitlich von der Unterputzdose abstehendes Halteelement vorgesehen, welches zur Befestigung der Unterputzdose insbesondere an einer Armierung dient. Ein Kupplungsmittel dient zum Wirkverbinden des mindestens einen Halteelements an der Unterputzdose. Das mindestens eine Halteelement kann in vertikaler Richtung gegenüber der Unterputzdose verstellbar ausgebildet sein. Je nach Ausführungsform kann das mindestens eine Halteelement in mindestens zwei Positionen gegenüber der Unterputzdose befestigbar sein. Das mindestens eine Halteelement kann bei Bedarf in Umfangsrichtung verstellbar ausgebildet sein. Das Kupplungsmittel kann eine Schwalbenschwanzführung aufweisen welche zum Wirkverbinden dient. Das mindestens eine Halteelement kann über einen Adapter indirekt mit der Unterputzdose wirkverbindbar sein. Die Unterputzdose kann mindestens eine Rohreinführung aufweisen, welche in Umfangsrichtung versetzt zum mindestens einen Halteelement angeordnet ist. Das mindestens eine Halteelement kann gekröpft ausgestaltet sein. Das mindestens eine Halteelement kann ein Befestigungsmittel aufweist, mittels dem das Halteelement an einer Armierung befestigbar ist. Das Befestigungsmittel kann eine beweglich angeordnete Lasche sein, welche z.B. gegen die Kraft einer Feder auslenkbar ist. Das Befestigungsmittel kann auch ein Scharnier, insbesondere ein Schnappscharnier, aufweisen, derart, dass das Befestigungsmittel zwischen zwei stabilen Positionen hin und her geschnappt und so zu Befestigung der Unterputzdose beitragen kann. Das Schnappscharnier kann eines oder mehrere aus Kunststoff hergestellte Filmscharniere aufweisen. Das mindestens eine Halteelement kann ein Wirkverbindungsmittel zum Wirkverbinden einer weiteren Unterputzdose und/oder eines weiteren Halteelements aufweisen. Alternativ oder in Ergänzung können Wirkverbindungsmittel vorgesehen werden mittels denen zwei Unterputzdosen direkt miteinander wirkverbunden werden können. Eine Unterputzdose, welche zum Wirkverbinden mit einer weiteren Unterputzdose vorgesehen ist, kann an mindestens einer Seitenwand eine Öffnung (erste Öffnung) aufweisen, welche in wirkverbundenem Zustand zur Durchführung von Kabeln geeignet ist. Die Öffnung ist in der Regel bei Auslieferung der Unterputzdose durch eine Kappe (erste Kappe) verschlossen, kann aber bei Bedarf einfach geöffnet werden. Die Kappe kann z.B. durch Spritzgiessen angeformt oder als separates Teil ausgebildet sein, welches angesteckt und/oder aufgeschnappt ist. Falls die Kappe integral angespritzt ist, ist sie über mindestens eine Dünnstelle mit der Unterputzdose wirkverbunden. Die mindestens eine Dünnstelle kann zumindest bereichsweise in der Ebene einer Seitenfläche angeordnet sein oder aber auch von dieser Vorstehen. Die Dünnstelle kann als Sollbruchstelle ausgebildet sein, so dass die Kappe z.B. mittels eines Hammers ausgeschlagen oder einem Messer abgeschnitten werden kann. In einer bevorzugten Ausführungsform weist die Unterputzdose diametral gegenüber der ersten Öffnung eine zweiten Öffnung auf, welche in der Regel zur ersten Öffnung kompatibel ausgestaltet ist und ebenfalls durch eine Kappe (zweite Kappe) verschlossen sein kann. Die zweite Kappe ist in der Regel auf die selbe Art und Weise wie die erste Kappe mit der Unterputzdose wirkverbunden. Im Bereich der mindestens einen Öffnung sind mit Vorteil Wirkverbindungsmittel angeordnet mittels denen zwei Unterputzdosen direkt oder indirekt miteinander wirkverbunden werden können. In einer bevorzugten Variante, welche die beiden zu verbindenden Unterputzdosen besonders gut gegeneinander abdichten, können die Unterputzdosen im Bereich der einander zugewandten ersten und zweiten Öffnungen miteinander wirkverbunden werden. Eine der beiden Öffnungen weist zu diesem Zweck eines oder mehrere nach aussen vorstehende und einen Hintergriff bildende erste Haltemittel auf, in welche eines oder mehrere zu diesen kompatibel ausgestaltete zweite Haltemittel eingehängt oder eingeschnappt werden können. In den Figuren wird eine entsprechende Ausführungsform näher erläutert. Alternativ oder in Ergänzung kann ein Adapter zum Wirkverbinden vorgesehen werden. Je nach Ausführungsform können die ersten und die zweiten Haltemittel auch seitlich neben den Öffnungen ausgestaltet sein. Zumindest eine der beiden Öffnungen kann mit einer Dichtung ausgestattet sein, welche beim Wirkverbinden der beiden Unterputzdosen diese gegeneinander abdichten, so dass beim Betonieren keine Flüssigkeit ins Innere eintritt. Die oben beschriebene Art und Weise der Wirkverbindung von zwei Unterputzdosen eignet sich auch für Unterputzdosen ohne Haltemittel.

Die Erfindung soll nachfolgend anhand von Ausführungsbeispielen im Zusammenhang mit der Zeichnung näher erläutert werden. Es zeigen:
- Fig. 1: eine Explosionsdarstellung einer Ausführungsform einer Unterputzdose mit zwei Halteelementen in perspektivischer Ansicht von oben;
- Fig. 2: eine Explosionsdarstellung der Unterputzdose aus Fig. 1 in perspektivischer Ansicht von unten;
- Fig. 3: eine Draufsicht auf eine Unterputzdose mit geraden Halteelementen;
- Fig. 4: eine Draufsicht auf eine Unterputzdose mit gekröpften Halteelementen;
- Fig. 5: eine Explosionsdarstellung einer Ausführungsform einer Unterputzdose mit zwei Halteelementen und Adaptern in perspektivischer Ansicht von oben;
- Fig. 6: eine Draufsicht auf die Unterputzdose aus Fig. 5;
- Fig. 7: eine Schnittdarstellung entlang der Schnittlinie A-A aus Fig. 6;
- Fig. 8: eine perspektivische Ansicht von einer Ausführungsform einer Unterputzdose; und
- Fig. 9: unter (a) eine perspektivische Ansicht auf eine Unterputzdose und unter (b) ein vergrösserter Ausschnitt (A) des Kupplungsmittels;
- Fig. 10: eine perspektivische Ansicht von drei Unterputzdosen einer Ausführungsform in verbundenem Zustand;
- Fig. 11: Detail C aus Fig. 10;
- Fig. 12: Detail B aus Fig. 10;
- Fig. 13: eine perspektivische Ansicht einer Verbindungsstelle;
- Fig. 14: eine perspektivische Ansicht einer Unterputzdose einer Ausführungsform;
- Fig. 15: Detail D aus Fig. 14;
- Fig. 16: eine perspektivische Ansicht einer Ausführungsform einer Unterputzdose mit aus illustratorischen Gründen teilweise aufgeschnittener Seitenwand;
- Fig. 17: unter (a) Detail E aus Fig. 16 und unter (b) Detail F aus Fig. 16;
- Fig. 18: eine perspektivische Ansicht einer Unterputzdose in einer Ausführungsform mit abgetrennten Kappen und aus illustratorischen Gründen teilweise aufgeschnittener Seitenwand;
- Fig. 19: eine perspektivische Darstellung einer Unterputzdose in einer Ausführungsform in verbundenem Zustand und aus illustratorischen Gründen teilweise aufgeschnittenen Seitenwänden;
- Fig. 20: Detail G aus Fig. 19;
- Fig. 21: zeigt zwei zusammengehängte Unterputzdosen in zusammengehängtem Zustand und aus illustratorischen Gründen teilweise aufgeschnittenen Seitenwänden;
- Fig. 22: Detail H aus Fig. 19;
- Fig. 23: eine Ausführungsform eines Deckels für eine Ausführungsform einer Unterputzdose.

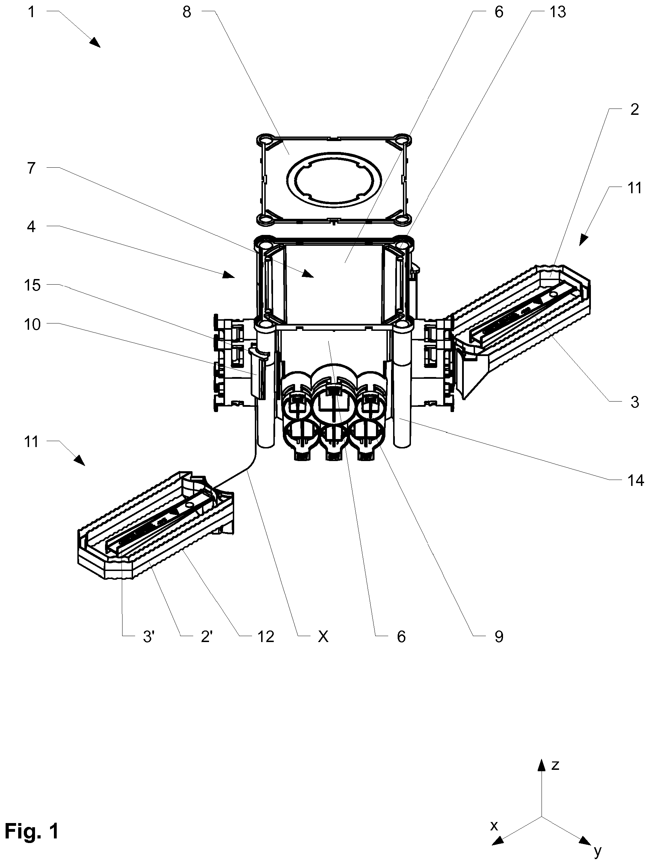

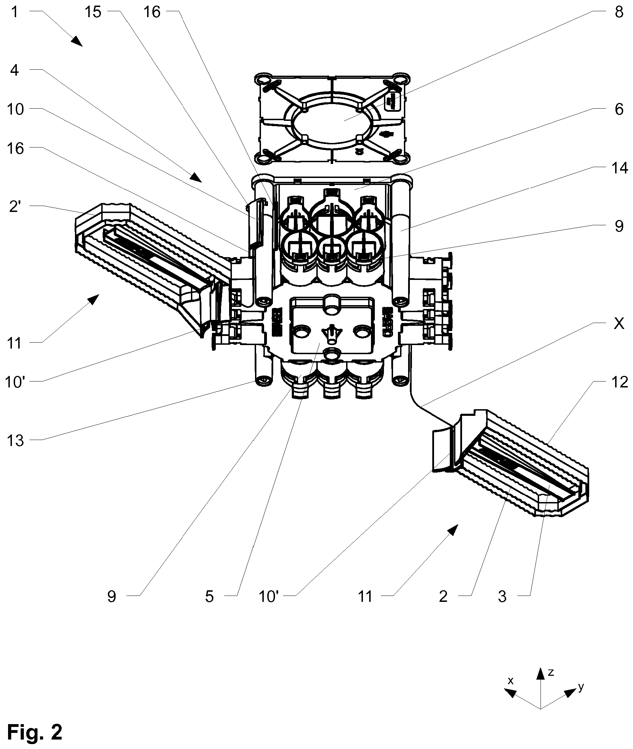

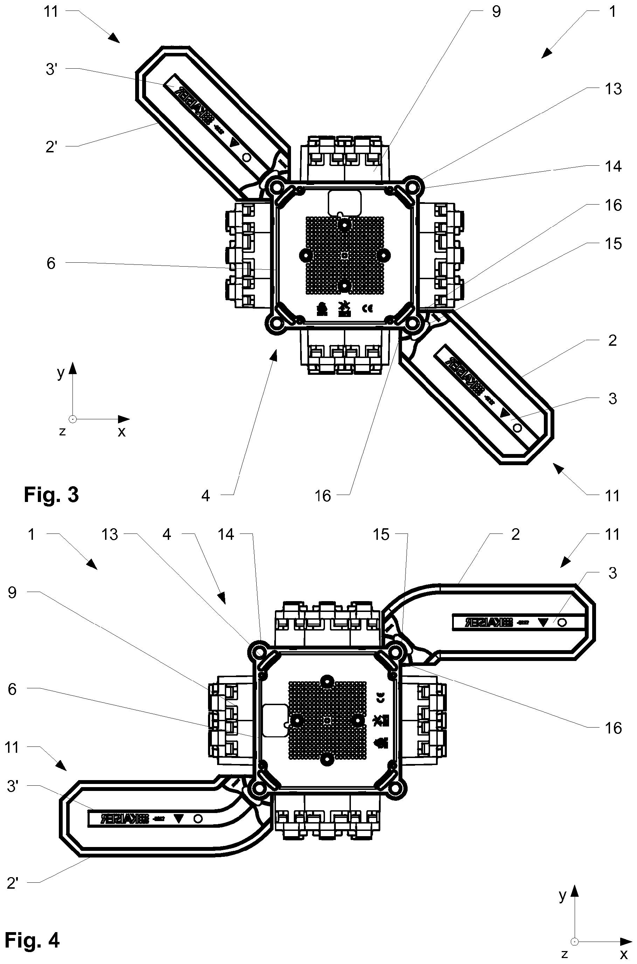

**Figuren 1** **und** **2** zeigen eine Explosionsdarstellung einer Unterputzdose 1 mit zwei Halteelementen 11 jeweils in einer perspektivischen Ansicht von oben und von unten. Die Halteelemente 11 sind losgelöst von der Unterputzdose 1 dargestellt. **Figur 3** zeigt eine Draufsicht auf die Unterputzdose aus **Figur 1** mit angesetzten geraden Halteelementen 11. **Figur 4** zeigt eine Draufsicht auf eine Unterputzdose mit angesetzten gekröpften Halteelementen 11.

Die Unterputzdose 1 ist im Wesentlichen rechteckig oder quaderförmig und weist ein Gehäuse 4 mit einem Boden 5 und vier Seitenwänden 6 auf. Von der Oberseite her ist der Innenraum (sog. Anschlussraum) des Gehäuses über eine Bedienöffnung 7 zugänglich. Die Bedienöffnung 7 ist mit einem Deckel 8 verschliessbar, welcher nach der Montage resp. dem Einbetonieren der Unterputzdose entfernt werden kann. In den Seitenwänden 6 sind in einem unteren Bereich eine Mehrzahl von Durchführungsstellen für Kabel ausgebildet, welche Muffen 9 für die Befestigung von Anschlussrohren aufweisen. Entlang den Ecken des Gehäuses 4 sind Hülsen 14 mit Öffnungen 13 vorgesehen, welche zum Durchstecken von Nägeln geeignet sind, mittels denen die Dose auf einer Verschalung befestigt werden kann.

Die Halteelemente 11 weisen Auflageabschnitte auf, die in der Ausführungsform aus **Figur 1** als auskragende Bügel 2, 2' oder umlaufender Steg ausgebildet sind, welche im montierten Zustand im Wesentlichen senkrecht von den Seitenwänden 6 abstehen, d.h. sie verlaufen im Wesentlichen parallel zur von der Bedienöffnung 7 aufgespannten Ebene. Die Halteelemente 11 können auch als einzelner Steg oder als zwei parallel verlaufende Stege ausgebildet sein. Die Bügel 2, 2' resp. Stege der Halteelemente 11 liegen in der Regel in der Ebene der Armierung, an welcher sie befestigbar sind. Um eine hohe Stabilität der Bügel 2, 2' resp. Stege zu erreichen, weisen diese vorzugsweise einen H-förmigen Querschnitt auf, wobei andere Querschnitte z.B. U-, V- oder L-förmige ebenfalls möglich sind.

Die Länge der Halteelemente 11 resp. der Bügel 2, 2' oder Stege sollte so bemessen sein, dass bei einer Unterputzdose, die zwischen einzelne Stäbe einer Armierung platziert wird, die Bügel 2, 2' oder Stege jeweils mindestens einen Stab kreuzen. Die Länge des Bügels 2, 2' oder Stegs entspricht vorzugsweise in etwa der Breite der Unterputzdose. Um ein Verrutschen relativ zur Armierung zu verhindern, können die Halteelemente 11 resp. die Bügel 2, 2' oder Stege zudem vorzugsweise beidseitig eine Verzahnung 12 aufweisen.

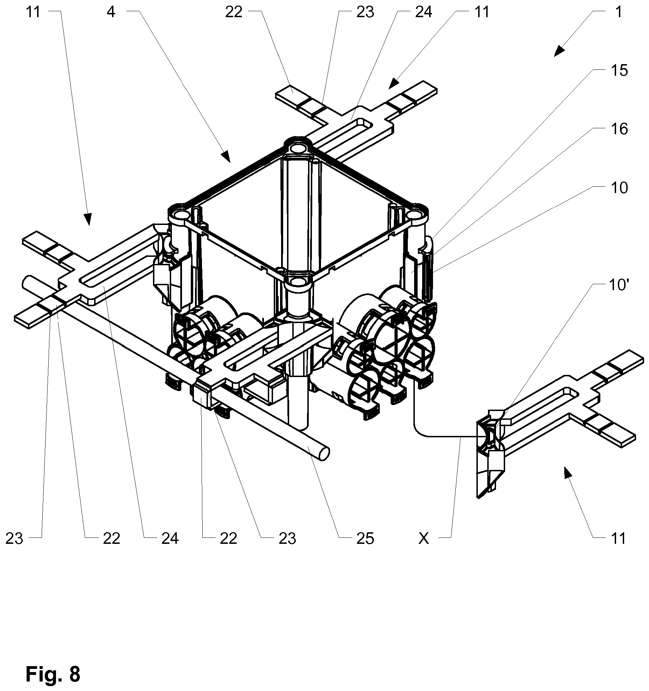

Zur lösbaren Befestigung der Halteelemente 11 am Gehäuse 4 sind Kupplungsmittel 10, 10' vorgesehen, die einen am Gehäuse angeordneten Teil des 10 und einem am Halteelement 11 angeordneten Teil 10' aufweisen. In der dargestellten Ausführungsform sind die Kupplungsmittel 10 an zwei diagonal gegenüberliegenden Ecken des quaderförmigen Gehäuses 4 angeordnet. Weitere Kupplungsmittel 10 in den anderen Ecken sind möglich, wie z.B. in **Figur 8** gezeigt.

Die Kupplungsmittel 10, 10' weisen eine Schwalbenschwanzführung auf, wobei in der gezeigten Ausführungsform der Teil des Kupplungsmittels 10' am Halteelement als Nut und der Teil des Kupplungsmittels 10 am Gehäuse als Schiene mit Hinterschnitt ausgebildet ist. Das Halteelement 11 kann dabei entlang der Linie X einfach auf das Gehäuse 4 aufgeschoben werden. Die Kupplungsmittel 10, 10' sind derart ausgestaltet, dass die Halteelemente 11 lösbar mit der Unterputzdose 1 wirkverbindbar sind.

Bei der Montage der Unterputzdose 1 wird diese mit den Halteelementen 11 resp. mit deren Auflageabschnitten 2, 2' z.B. auf eine Armierung (nicht dargestellt) gelegt und anschliessend zwischen Armierung und Schalung eingeklemmt, so dass die Oberseite der Unterputzdose 1 (d.h. die Bedienöffnung 7 und/oder der Deckel 8) gegen die Schalung gedrückt wird. Um ein selbstständiges Lösen der Halteelemente 11 von der Unterputzdose 1 und somit ein fehlerhaftes Aufliegen der Unterputzdose 1 an der Schalung oder ein Verrutschen in senkrechter Richtung gegenüber der Armierung zu vermeiden, ist das Halteelement 11 vorzugsweise nur von der Unterseite her auf die Unterputzdose 1 aufschiebbar. Dazu weist das Kupplungsmittel 10 an der Seite der Unterputzdose resp. des Gehäuses einen oberen Anschlag 15 auf.

Das Gehäuse 4 weist weiter beim Kupplungsmittel 10 seitlich angeformte Anschläge 16 auf, um ein unerwünschtes seitliches Abschwenken oder Abdrücken der Halteelemente 11 zu verhindern. Die Anschläge 16 sind als zwei Schenkel ausgebildet, die beidseits des Kupplungsmittels an der Dose derart angeordnet sind, dass der Winkel zwischen einem Schenkel und der jeweilig benachbarten Seitenwand 6 der Dose 90 Grad beträgt, um die Werkzeugherstellung zu vereinfachen - wie vorangehend erläutert wurde.

Der Auflageabschnitt 2, 2' des Halteelements 11 ist gegenüber dem am Halteelement 11 vorgesehen Teil des Kupplungsmittels 10' aussermittig angeordnet, so dass das Halteelement 11 in einer ersten und einer zweiten Position am mit dem am Gehäuse 4 vorgesehen Teil des Kupplungsmittels 10 befestigbar ist. Für die zweite Position wird das Halteelement 11 einfach um 180 Grad um deren Längsachse gedreht und auf das Gehäuse aufgeschoben. Auf diese Weise kann die Unterputzdose für zwei unterschiedliche Betondeckungen verwendet werden, weil das Halteelement 11 auf zwei Arten mit unterschiedlichen Abständen zwischen Auflageabschnitt 2, 2' und Bedienöffnung 7 oder Deckel 8 der Unterputzdose an der Unterputzdose 1 befestigt werden kann.

Die Bügel 2, 2' oder Stege der Halteelemente 11 sind in einer Ausführungsform gerade ausgebildet (wie z.B. in den Figuren 1 bis 3 dargestellt), so dass sie, wenn an den Ecken der Unterputzdose 1 montiert, im Wesentlichen entlang einer Diagonalen der Unterputzdose 1 verlaufen. In einer weiteren Ausführungsform können die Halteelemente 11 gekröpft ausgebildet sein, indem sie gekröpfte Bügel 2, 2' resp. Stege aufweisen, so dass die im Wesentlichen parallel zu einer Seitenwand 6 der Unterputzdose 1 verlaufen, wie z.B. bei der Unterputzdose 1 in **Figur 4** **oder** **8** dargestellt.

Die Halteelemente 11 können Befestigungsmittel aufweisen, mittels welchen die Halteelemente und somit die Unterputzdose an einer Armierung befestigt werden kann. Dazu ist vorzugsweise im vom Bügel 2, 2' umschlossenen Bereich oder zwischen zwei Stegen eines Halteelements 11 eine Lasche 3, 3' vorgesehen mittels, welcher die Unterputzdose zur schnellen Montage an der Armierung festgeklemmt werden kann. Die Lasche ist derart am Halteelement angeformt oder mit diesem verbunden, dass sie gegen die Kraft einer Feder auslenkbar ist.

Sind zwei diametral angeordnete Halteelemente 11 vorgesehen, ist bei einem Halteelement 11 die Lasche 3' an der Seite der Unterputzdose im Bereich des Kupplungsmittels 10' angeformt und beim anderen Halteelement ist die Lasche 3 an der von der Unterputzdose entfernten Seite am Bügel 2' angeformt. Auf diese Weise kann die Unterputzdose in einer seitlichen Bewegung gleichzeitig mit beiden Laschen 3, 3' an einer Armierung festgeklemmt werden. Diese unterschiedliche Anordnung der Laschen 3, 3' ist sowohl bei graden wie auch gekröpften Bügel 2, 2' möglich.

Zusätzlich zu den Halteelementen 11 sind bei der Unterputzdose 1 aus **Figur 1** an den Ecken Öffnungen 13 vorgesehen, die zum Durchstecken von Nägeln geeignet sind, mittels denen die Unterputzdose 1 auf einer Verschalung befestigt werden kann. Die Öffnungen 13 sind ausserhalb des Querschnitts des Gehäuses 4 angeordnet, indem Hülsen 14 entlang den Ecken angeformt sind. Der dosenseitige Teil des Kupplungsmittels 10 sind dabei an den Hülsen 14 angeformt.

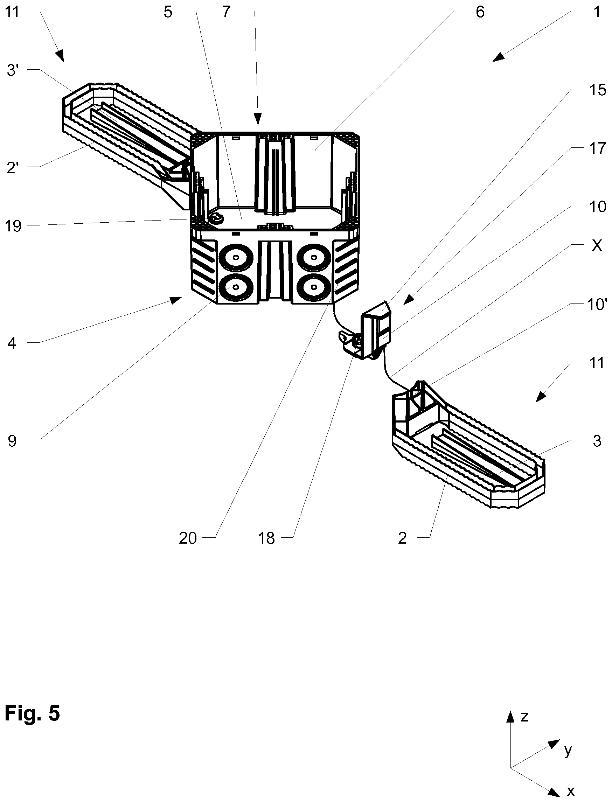

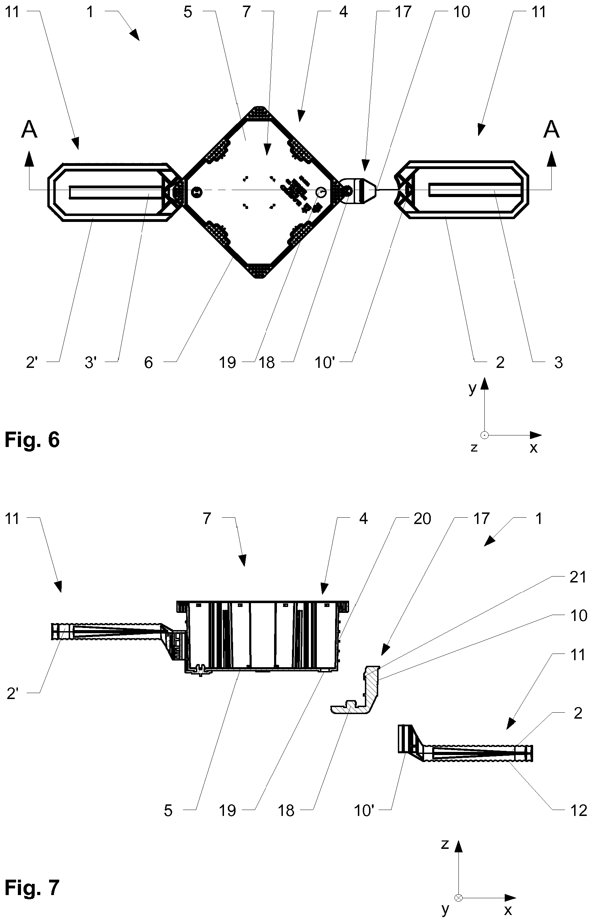

Die **Figuren 5 bis 7** zeigen eine Ausführungsform einer Unterputzdose 1 mit zwei Halteelementen 11 und Adaptern 17. **Figur 5** zeigt eine Explosionsdarstellung in perspektivischer Ansicht von oben; **Figur 6** zeigt eine Draufsicht auf die Unterputzdose aus **Figur 5** **und** **Figur 7** zeigt einen Schnittdarstellung entlang der Schnittlinie A-A aus **Figur 6****.**

Im Unterschied zu den Ausführungsformen aus den **Figuren 1 bis 4** weist die Ausführungsform aus den **Figuren 5 bis 7** zusätzlich einen Adapter 17 auf, mit dem das Halteelement 11 an der Unterputzdose 1 befestigbar ist. Der Adapter 17 wird im gezeigten Beispiel jeweils an einer Ecke des Gehäuses 4 der quaderförmigen Unterputzdose befestigt. Beim gezeigten Beispiel weist der Adapter 17 einen Noppen 18 auf, mittels welchem er in einer Vertiefung 19 im Boden 5 der Unterputzdose 1, z.B. bei Sollbruchstellen für eine Nagelbefestigung, eingreifen kann. Weiter weist die Unterputzdose 1 an den Ecken Rippen 20 auf, die in eine entsprechende Nut 21 des Adapter 17 eingreifen. Ein Teil des Kupplungsmittels 10 ist am Adapter 17 angeordnet, so dass das Halteelement 11 mit dem anderen Teil des Kupplungsmittels 10' am Adapter 17 und somit am Gehäuse der Unterputzdose 1 befestigt werden kann. Das Halteelement 11 ist so über den Adapter 17 mit der Unterputzdose wirkverbindbar.

Der Adapter 17 dient als Anpassungselement um Halteelemente 11 einer bestimmten Ausgestaltung mit unterschiedlichen Unterputzdosen 1 wirkverbinden zu können. Die Kupplungsmittel 10, 10' sind derart ausgestaltet, dass die Halteelemente 11 lösbar mit der Unterputzdose 1 resp. dem Adapter 17 wirkverbindbar sind. Am Adapter 17 weist das Kupplungsmittel 10 ebenfalls einen oberen Anschlag 15 auf.

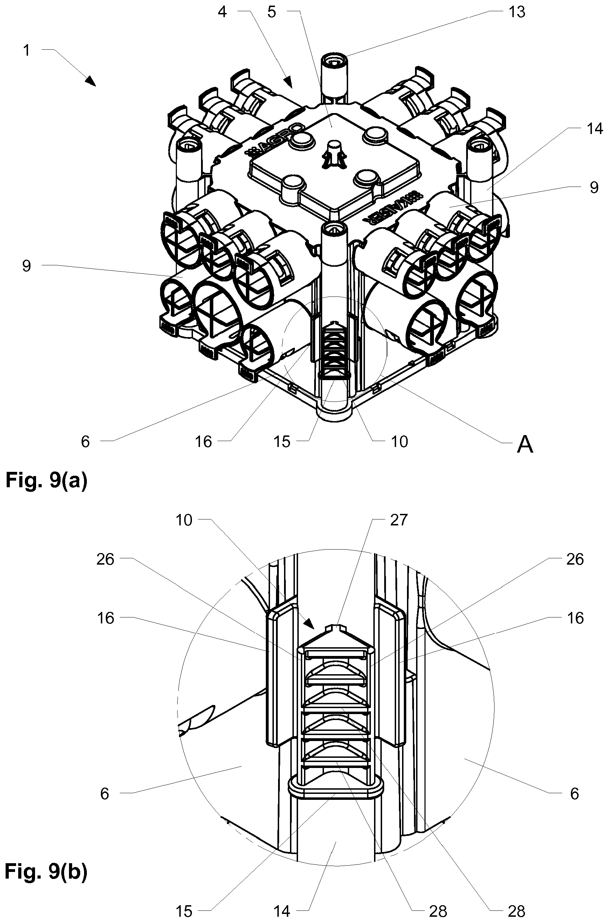

Die Unterputzdose 1 der **Figuren 5 bis 7** kann auch ein Kupplungsmittel 10 gemäss **Figur 9(b)** aufweisen, welches im Bereich der Ecken an die Dose angeformt ist.

**Figur 8** zeigt eine perspektivische Ansicht einer Unterputzdose 1 mit mehreren Halteelementen 11. Im Unterschied zur Unterputzdose 1 aus der **Figur 1** ist die Unterputzdose aus **Figur 8** mit vier Halteelementen 11 versehen, wovon eines losgelöst dargestellt ist. Kupplungsmittel 10 sind an allen vier Ecken der Unterputzdose 1 ausgestaltet. Die Halteelemente 11 weisen jeweils einen gegenüber dem Kupplungsmittel 10' gekröpften Bügel 24 auf. Als Befestigungselement am Bügel 24 sind jeweils zwei Laschen 22 mit jeweils zwei Scharnieren 23 angeformt. Die Scharniere 23 sind derart angeordnet und ausgebildet, dass sie zwischen zwei stabilen Positionen hin und her geschnappt werden können und so ein festes Umgreifen einer Armierung 25 erlauben.

**Figur 9(a)** zeigt eine perspektivische Ansicht einer Unterputzdose 1. **Figur 9(b)** zeigt einen vergrösserten Ausschnitt des Kupplungsmittels 10 der Unterputzdose aus **Figur 9(a)****.** Die Unterputzdose 1 entspricht im Wesentlichen der voranbeschriebenen Unterputzdosen 1, wobei die gleiche Bezugszeichen verwendet wurden, so dass hier nicht beschriebene Bereiche resp. Bezugszeichen aus den voranbeschriebenen Ausführungsformen hervorgehen.

Bei der Unterputzdose 1 aus den **Figuren 9(a) und 9(b)** ist das Kupplungsmittel 10 als Schwalbenschwanzführung ausgebildet. Dabei ist nur der dosenseitige Teil des Kupplungsmittels 10 gezeigt, welcher als schwalbenschwanzförmige Schiene ausgebildet ist. Das Halteelement 11 weist ein Kupplungsmittel 10' mit einer zur Schiene komplementäre Nut auf, wie z.B. in den **Figuren 5 bis 7** gezeigt.

Die Schiene weist einen schwalbenschwanzförmigen Querschnitt auf, welcher in der gezeigten Ausführungsform durch zwei seitlich abstehende Schenkel 26 ausgebildet wird, die an einem entlang der Ecke resp. der Hülse 14 der Dose verlaufenden Steg 27 angeformt sind. Alternativ kann die Schiene auch als Vollkörper ausgebildet sein. Seitlich weist die Schiene Führungs- resp. Halteflächen der Schwalbenschwanzführung auf. Der Winkel zwischen den beiden Schenkeln 26 resp. den Führungsflächen ist kleiner oder gleich 90 Grad, so dass der Winkel zwischen einer jeweiligen Führungsfläche und deren benachbarten Seitenwand 6 der Dose grösser oder gleich 90 Grad ist. Auf diese Weise können die ohnehin komplizierten Werkzeuge zur Herstellung der Dose im Spritzgussverfahren stark vereinfacht werden, indem die Führungsflächen der Schwalbenschwanzführung einer Entformungsrichtung des Werkzeugs, z.B. senkrecht zur angrenzenden Seitenwand 6, angepasst sind. D.h. mit Blick senkrecht auf eine Seitenwand 6, weist die an die Seitenwand 6 angrenzende Hälfte der Schiene keinen Hinterschnitt auf. Zur Stabilisierung weist die Schiene zwischen den beiden Schenkeln 26 mehrere Querrippen 28 auf.

Die Anschläge 16 sind durch zwei Schenkel ausgebildet, die beidseits des Kupplungsmittels 10 an der Dose angeordnet sind. Diese sind ebenfalls derart angeordnet, dass der Winkel zwischen dem Schenkel und der jeweilig benachbarten Seitenwand 6 der Dose 90 Grad beträgt, um die Werkzeugherstellung zu vereinfachen - wie bereits oben erläutert.

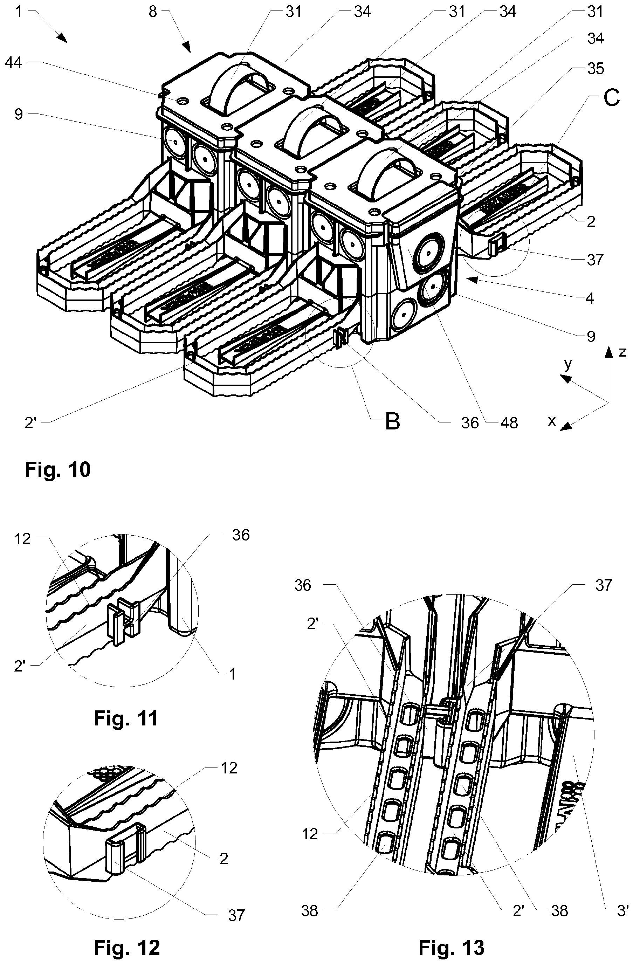

**Figur 10** zeigt eine weitere Ausführungsform einer Dose 1, welche je nach Anwendungsgebiet mit oder auch ohne Bügel 2, 2' verwendet werden kann. Weiterhin bietet die gezeigte Ausführungsform die Möglichkeit, mehrere Dosen 1 auf eine effiziente Art und Weise miteinander zu einer grösseren Dose (Mehrfachdose) zusammen zu bauen. Ein Vorteil besteht darin, dass die Dosen 1 trotzdem eine einfach herzustellende Geometrie aufweisen. Dieser Aspekt kann wie bereits erwähnt als eigenes erfinderisches Konzept betrachtet werden.

Die in der in **Figur 10** gezeigten als Bügel 2, 2' gestalteten Halteelemente 11 verfügen über jeweils ein erstes Wirkverbindungsmittel 36 auf einer ersten Seite und ein zweites Wirkverbindungsmittel 37 auf einer zweiten Seite. Diese Wirkverbindungsmittel dienen als Rastelemente. Die ersten Wirkverbindungsmittel 36 sind in der gezeigten Ausführungsform T-förmig ausgebildet, wie in **Figur 11** gezeigt ist. Die zweiten Wirkverbindungsmittel 37 können wie in der in **Figur 12** gezeigten Ausführungsform klammerförmig ausgebildet sein. Andere Ausgestaltungen sind möglich. In verbundenem Zustand ist das erste Wirkverbindungsmittel 36 eines ersten Bügels 2' in das zweite Wirkverbindungsmittel 37 eines angrenzenden Bügels eingeschoben, wie dies in **Figur 13** illustriert ist. Die Breite der Bügel 2, 2' ist auf die Kantenlänge der Unterputzdose 1 so abgestimmt, dass diese nahtlos miteinander verbunden werden können. Vorteilhaft an einer solchen Ausführungsform von Wirkverbindungsmitteln ist, dass zur Verbindung mehrerer Unterputzdosen diese nacheinander direkt oder indirekt aneinander gesteckt werden können.

Wie in **Figur 13** gezeigt wird, sind alternativ oder in Ergänzung auch Ausführungsformen von Bügeln 2' mit Ausnehmungen 38 in den Stegen möglich, welche zur Aufnahme eines oder mehrerer Rödeldrähte dienen, mittels denen das Halteelement 11 an einer Armierung (beides nicht weiter dargestellt) befestigt werden kann. Es ist vorteilhaft, wenn die Ausnehmungen 38 zumindest in einer Ausdehnungsrichtung einen Durchmesser haben, der grösser als der Durchmesser einer Endöse eines zur Befestigung verwendeten Rödeldrahts ist.

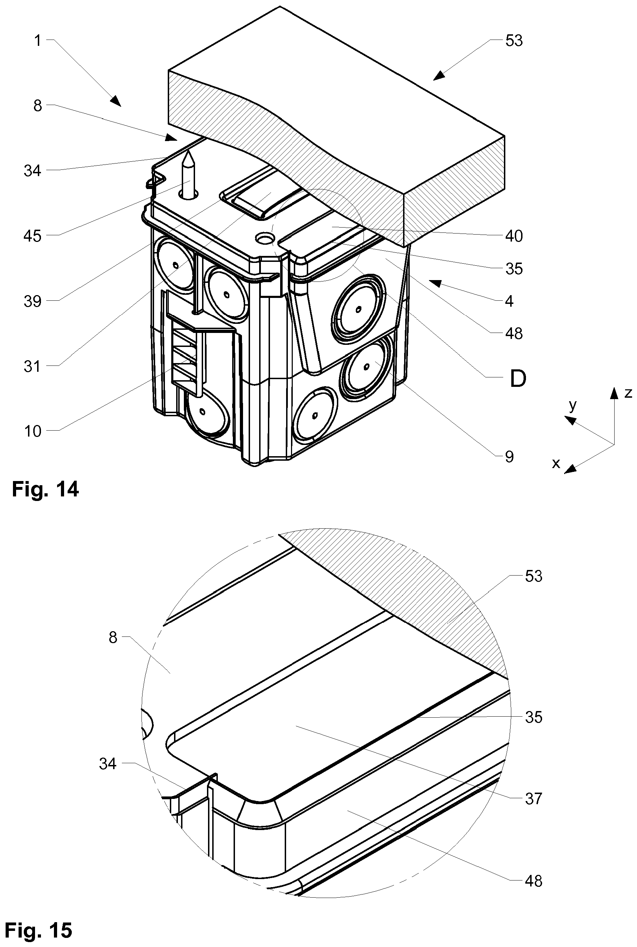

Die **Figur 14** zeigt eine Ausführungsform einer Unterputzdose 1 in montiertem Zustand an einer Schalung 53 vor der Einbettung in beispielsweise Beton. Die Schalung 53 ist aus illustratorischen Gründen teilweise weggeschnitten, also nur schematisch dargestellt. Die Unterputzdose 1 wird in der gezeigten Ausführungsform durch Nägel 45 gehalten, wobei in **Figur 14** nur ein Nagel 45 sichtbar ist. Durch die Anpressung an die Schalung 53 wird der Griff 31 deformiert und liegt teilweise flachgedrückt in der dafür vorgesehenen Vertiefung 39, wobei auch ein Griffende (nicht gezeigt) durch einen Schlitz 33 im Deckel 8 ins Innere der Dose 1 geschoben sein kann. Die Dose 1 weist an ihrem zur Schalung 53 stehenden Ende eine umlaufende in Befestigungsrichtung vorstehende Dichtung 34, 35 gegenüber der Schalung 53 auf. Diese umfasst eine zum Deckel 8 gehörende erste Dichtlippe 34 und eine zum Gehäuse 4 gehörende zweite Dichtlippe 35. Diese beiden Dichtlippen 34, 35 verhindern beim Vergiessen des Betons, dass dieser zwischen Deckel 8 und Schalung 53 bzw. in die Dose fliessen kann. Je nach Ausführungsform kann die Dichtung auch nur einseitig, z.B. am Deckel ausgebildet sein.

Wie in **Figur 15** gezeigt, schliessen die zum Deckel gehörende Dichtlippe 34 und die zum Gehäuse 4 gehörende Dichtlippe 35 in der gezeigten Ausführungsform aneinander an und ergänzen sich. Die zum Gehäuse gehörende Dichtlippe 35 ist in der gezeigten Variante an einer ersten Kappe 48 angebracht, deren Funktion nachfolgend noch näher erläutert wird.

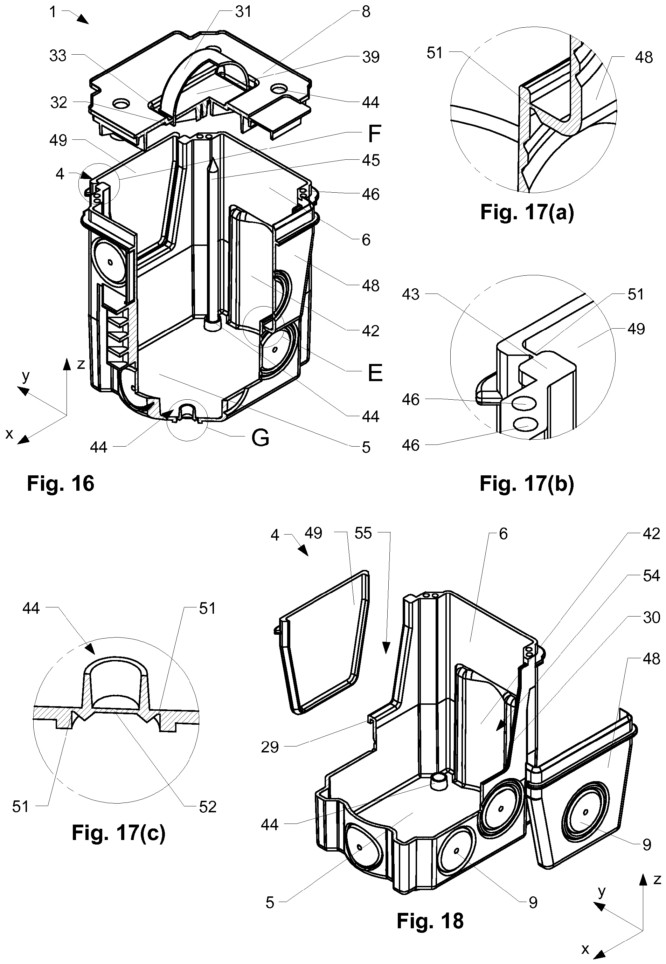

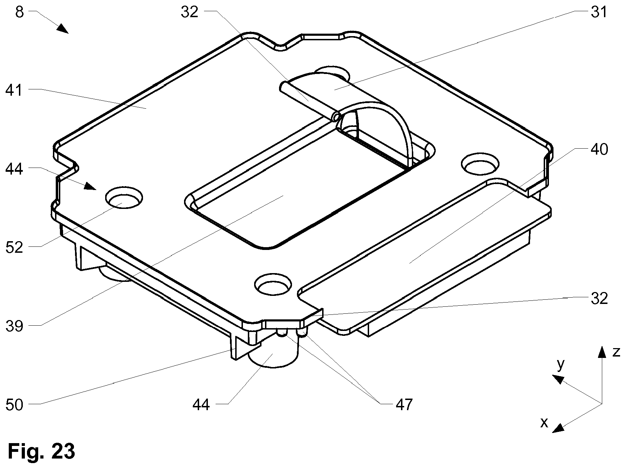

Wie in **Figur 16** gezeigt, weist das Gehäuse 4 der gezeigten Ausführungsform eine erste Kappe 48 und eine zweite Kappe 49 auf, welche hier Bereiche der Seitenwand 6 der Unterputzdose 1 bilden. Die erste Kappe 48 ist über eine Trennstelle 51 (Sollbruchstelle) mit der restlichen Seitenwand verbunden, wie in **Figur 17(a)** gezeigt wird. Die Trennstelle 51 steht in der gezeigten Variante senkrecht zur Seitenwand 6 des Gehäuses 4 angeordnet. Eine solche Verbindung kann jedoch auch mit anderen Befestigungsmöglichkeiten erfolgen und/oder in der Ebene der Seitenwand 6 liegen. Die zweite Kappe 49 ist ebenfalls über eine Trennstelle 51 (Sollbruchstelle) mit der restlichen Seitenwand verbunden, wie in **Figur 17(b)** gezeigt wird. Beide Trennstellen 51 ermöglichen ein relativ einfaches Ablösen der Kappen 48, 49 vom restlichen Gehäuse 4. Möglich ist dies etwa mittels Durchschneiden der Trennstelle mit einem Messer oder einer Säge oder durch Entfernen einer Abziehlasche. Die zweite Kappe 49 geht an ihrer Stirnfläche übergangslos in die restliche Stirnfläche 43 des Gehäuses über, wie in **Figur 17(b)** gezeigt wird. Die Stirnfläche der ersten Kappe 48 wird hingegen von der zum Gehäuse gehörenden Dichtlippe 35 gebildet, wie in **Figur 15** gezeigt ist. Die Stirnfläche 43 des Gehäuses 4 umfasst in der gezeigten Ausführungsform zudem Bohrungen 46, die primär als Schraubenlöcher zur späteren Montage eines Gerätes dienen, aber auch zur Aufnahme von an einem Deckel angebrachten Zapfen 47 zur Zentrierung desselben geeignet sind (vgl. nachfolgende **Figur 23**).

Der Boden 5 der in **Figur 16** gezeigten Dose 1 weist Nagelbefestigungen 44 auf, die im Innern des Dosenkörpers angeordnet sind. Diese Nagelbefestigungen 44 können wie gezeigt eine von einer Nagelspitze einfach zu durchstossende mittlere Membran 52 sowie eine periphere Sollbruchstelle 51 aufweisen. Die Sollbruchstellen 51 ermöglichen es, die Nägel nach dem Eingiessen in Beton durch den Dosenkörper hindurch auszubrechen, nachdem die Schalungsbretter entfernt sind.

Wie in **Figur 16** gezeigt, weist das Gehäuse 4 dieser Ausführungsform an der Seitenwand ausgebildete Abrundungen 42 auf, die dazu dienen, bei der Montage das Einbringen der Kabel (nicht weiter dargestellt) im Gehäuseinnern zu unterstützen.

Wie aus **Figur 18** ersichtlich sind, die erste und die zweite Kappe 48, 49 unterschiedlich ausgestaltet. Beim Ablösen der ersten Kappe 48 wird ein ins innere der ersten Öffnung 54 vorstehender Rand freigestellt, welcher als zweites Haltemittel 30 dient. Beim Ablösen der zweiten Kappe 49 wird ein nach aussen vorstehender Rand freigestellt, welcher eine umlaufende Nut bildet, die als erstes Haltemittel 29 dient. Das erste Haltemittel 29 ist so ausgebildet, dass es einen Hintergriff ergibt, der mit dem zweiten Haltemittel 30 durch Zusammenstecken wirkverbunden werden kann.

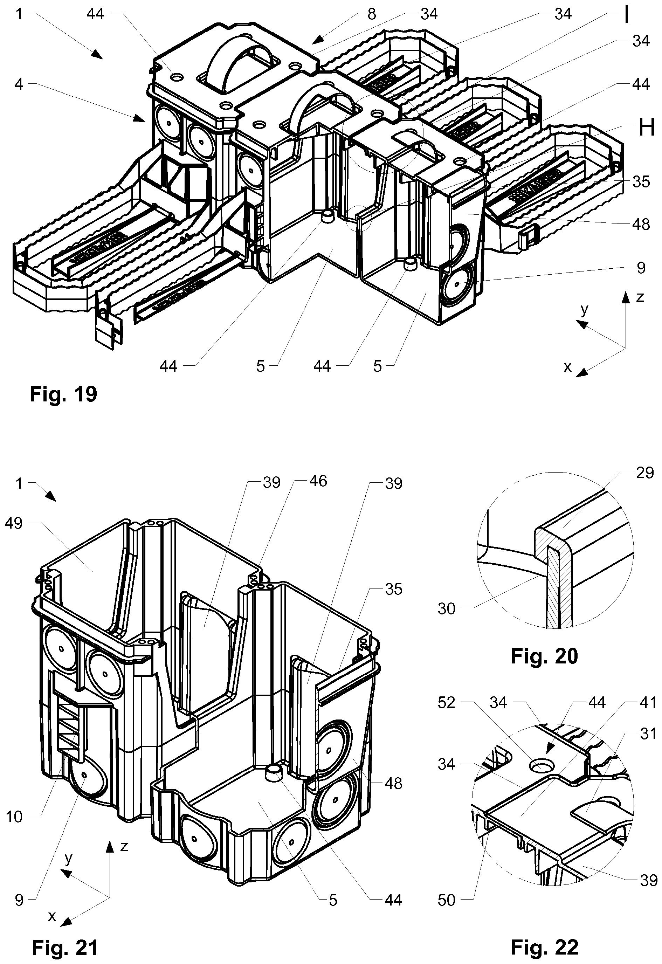

Wie in **Figur 19** mit Bügeln 2, 2', sowie in den **Figuren 20** bis **21** (ohne Bügel) gezeigt, können mehrere Dosen 1 nach Entfernen von ersten und zweiten Kappen 48, 49 durch Einhängen der Gehäuse 4 zu einer grösseren Dose 1 (Mehrfachdose) wirkverbunden werden. Die Deckel 8 der gezeigten Ausführungsform sind dabei so ausgestaltet, dass sie einander schuppenartig überlappen und so gezielt ergänzen. Dies hat den Vorteil, dass dieselben Deckel 8 für die einzelnen, aber auch für die Mehrfachdose 1 verwendet werden können. Die Dichtlippe 35 der ersten Kappe 48 einer ersten Dose gewährt in einer solchen Anordnung gemeinsam mit der Dichtlippen 34 des Deckels derselben Dose sowie den Dichtlippen 34 der Deckel 8 der daran angehängten Dosen 1 eine dichte Verbindung zur Schalung (nicht dargestellt), wie in den **Figuren 10** **und** **19** gezeigt wird.

In der gezeigten Ausführungsform weisen die Deckel 8 zudem Rippen 50 auf der Deckelinnenseite auf. Diese Rippen erhöhen einerseits die Gesamtfestigkeit und Gesamtsteifigkeit eines Deckels 8. Es ist andererseits auch vorteilhaft, wenn einzelne Rippen gezielt im Bereich der Plattform 40 angebracht sind, um die Dichtlippe 34 einer darüberliegenden Schuppe 41 zu unterstützen, wie in **Figur 22** gezeigt ist. Dadurch kann eine sichere Abdichtung zwischen den im zusammengehängten Zustand quasi transversalen Dichtlippen 34 im Bereich der Überlappungen erreicht werden. Eine solche ist vorteilhaft, weil dadurch bei zusammengehängten Dosen keine durchgehende an die Schalung angrenzende Fläche entsteht, die bei einem lokalen Eindringen von Beton komplett gefüllt würde. Stattdessen entstehen so durch die an den innen liegenden Schuppen 41 angebrachten Dichtlippen 34 voneinander getrennte Flächensegmente.

Die **Figur 23** zeigt eine weitere Ausführungsform eines Deckels 8 der bei Bedarf auf seiner Unterseite Zapfen 47 aufweist, die im mit dem Gehäuse 4 verbundenen Zustand in Bohrungen 46 des Gehäuses 4 zu liegen kommen. Die Bohrungen 46 dienen dabei primär im späteren Gebrauch zum Befestigen einer Elektroninstallation. Die Zapfen 47 dienen dabei einerseits der Positionierung und Halterung des Deckels und andererseits auch der sicheren Abdichtung der Bohrungen 46, so dass während dem Eingiessen des Betons kein solcher in die Bohrungen eindringen kann. Bei der in **Figur 23** gezeigten Ausführungsform ist der Griff 31 als eine am Deckel angespritzte federnde Lasche ausgeformt, wobei sich das Griffende 32 auf der Deckelaussenseite angeordnet ist.

**BEZEICHNUNGSLISTE**

| | | | |
|---|---|---|---|
| 1 | Unterputzdose (Dose) | 25 | Armierung |
| 2, 2' | Bügel | 26 | Schenkel |
| 3,3' | Lasche | 27 | Steg |
| 4 | Gehäuse | 28 | Querrippe |
| 5 | Boden | 29 | erstes Haltemittel (Hintergriff) |
| 6 | Seitenwand | 30 | zweites Haltemittel |
| 7 | Bedienöffnung | 31 | Griff |
| 8 | Deckel | 32 | Griffende |
| 9 | Muffen/Rohreinführung | 33 | Öffnung |
| 10 | Kupplungsmittel (Dose) | 34 | Dichtlippe Deckel |
| 10' | Kupplungsmittel (Halteelement) | 35 | Dichtlippe Gehäuse |
| 11 | Halteelement | 36 | erstes Wirkverbindungsmittel (männlich) |
| 12 | Verzahnung | | |
| 13 | Öffnung | 37 | zweites Wirkverbindungsmittel (weiblich) |
| 14 | Hülse | | |
| 15 | oberer Anschlag | 38 | Ausnehmung (Öffnung) |
| 16 | Anschlag | 39 | Vertiefung |
| 17 | Adapter | 40 | Plattform (für Schuppe) |
| 18 | Noppen | 41 | Schuppe(Zunge) |
| 19 | Vertiefung | 42 | Abrundung |
| 20 | Rippen | 43 | Stirnfläche |
| 21 | Nut | 44 | Nagelbefestigung |
| 22 | Lasche | 45 | Nagel |
| 23 | Scharnier | 46 | Bohrung |
| 24 | Bügel | 47 | Zapfen |
| 48 | erste Kappe | 52 | Membran (Dünnwand) |
| 49 | zweite Kappe | 53 | Schalung |
| 50 | Rippe | 54 | erste Öffnung |
| 51 | Trennstelle (Sollbruchstelle) | 55 | zweite Öffnung |

## Patentansprüche

1. Unterputzdose (1) mit mindestens zwei Halteelementen (11) umfassend
a. ein Gehäuse (4) mit einem Boden (5) und mehreren seitlich an den Boden (5) anschliessenden Seitenwänden (6);
b. wobei die Halteelemente (11) seitlich von der Unterputzdose (1) abstehen und zur Befestigung der Unterputzdose (1) insbesondere an einer Armierung (25) dienen; und
c. Kupplungsmittel (10, 10') zum Wirkverbinden der mindestens zwei Haltelemente (11) mit der Unterputzdose (1); wobei
d. die mindestens zwei Halteelemente (11) an zwei diagonal gegenüberliegenden Ecken über die Kupplungsmittel (10, 10') mit dem Gehäuse (4) der Unterputzdose (1) wirkverbunden sind; und
e. die Unterputzdose (1) und die Haltelemente (11) aus einem oder mehreren Kunststoffen durch Spritzgiessen hergestellt sind.

2. Unterputzdose (1) gemäss Patentanspruch 1, **dadurch gekennzeichnet, dass** die mindestens zwei Halteelemente (11) in vertikaler Richtung gegenüber der Unterputzdose (1) verstellbar sind.

3. Unterputzdose (1) gemäss einem der vorangehenden Patentansprüche, **dadurch gekennzeichnet, dass** das Kupplungsmittel (10, 10') eine Schwalbenschwanzführung aufweist.

4. Unterputzdose (1) gemäss einem der vorangehenden Patentansprüche, **dadurch gekennzeichnet, dass** die mindestens zwei Halteelemente (11) über einen Adapter (17) mit der Unterputzdose (1) wirkverbindbar sind.

5. Unterputzdose (1) gemäss einem der vorangehenden Patentansprüche, **dadurch gekennzeichnet, dass** die mindestens zwei Halteelemente (11) jeweils ein Befestigungsmittel (3, 3', 22) aufweisen, mittels denen die Halteelemente (11) an einer Armierung (25) befestigbar sind.

6. Unterputzdose (1) gemäss Patentanspruch 5, **dadurch gekennzeichnet, dass** das Befestigungsmittel eine beweglich angeordnete Lasche (3, 3') ist, welche gegen die Kraft einer Feder auslenkbar ist.

7. Unterputzdose (1) gemäss Patentanspruch 5, **dadurch gekennzeichnet, dass** das Befestigungsmittel (22) ein Scharnier (23), insbesondere ein Schnappscharnier, aufweist, derart, dass Befestigungsmittel (22) zwischen zwei stabilen Positionen hin und her geschnappt werden kann.

8. Unterputzdose (1) gemäss einem der vorangehenden Patentansprüche, **dadurch gekennzeichnet, dass** die mindestens zwei Halteelemente (11) Wirkverbindungsmittel zum Wirkverbinden einer weiteren Unterputzdose (1) und/oder eines weiteren Halteelements (11) aufweisen.

9. Unterputzdose (1) nach einem der vorangehenden Patentansprüche, **dadurch gekennzeichnet, dass** das Kupplungsmittel (10, 10') weiter einen Abstandshalter umfasst, mit welchem wahlweise der Abstand des Halteelements (11) zur Oberseite der Unterputzdose (1) eingestellt werden kann.

10. Unterputzdose (1) nach einem der vorangehenden Patentansprüche, **dadurch gekennzeichnet, dass** die Unterputzdose (1) an mindestens einer Seitenwand (6) eine erste Öffnung (54) aufweist, welche zum Durchführen von Kabeln in mindestens eine weitere Unterputzdose (1) dient, welche neben der Unterputzdose (1) angeordnet und mit dieser direkt oder indirekt wirkverbunden ist.

11. Unterputzdose (1) gemäss Patentanspruch 10, **dadurch gekennzeichnet, dass** die erste Öffnung (54) durch eine erste Kappe (48) verschlossen ist.

12. Unterputzdose (1) gemäss Patentanspruch 11, **dadurch gekennzeichnet, dass** die erste Kappe (48) über mindestens eine Dünnstelle (51) an der Unterputzdose (1) angeformt ist.

13. Unterputzdose (1) gemäss Patentanspruch 12, **dadurch gekennzeichnet, dass** die mindestens eine Dünnstelle (51) zumindest bereichsweise in der Ebene einer Seitenwand (6) der Unterputzdose (1) angeordnet ist oder von dieser absteht.

14. Unterputzdose (1) gemäss einem der Patentansprüche 10 bis 13, **dadurch gekennzeichnet, dass** diametral gegenüber der ersten Öffnung (54) eine zweite Öffnung (55) angeordnet ist, welche zur ersten Öffnung (54) kompatibel ausgestaltet ist.

15. Unterputzdose (1) gemäss einem der Patentansprüche 10 bis 14, **dadurch gekennzeichnet, dass** im Bereich der ersten und/oder der zweiten Öffnung erste und zweite Haltemittel (29, 30) angeordnet sind, welche zum Wirkverbinden von zwei Unterputzdosen (1) miteinander dienen.

16. Unterputzdose (1) gemäss Patentanspruch 15, **dadurch gekennzeichnet, dass** die Haltemittel (29, 30) im Innern der ersten und/oder der zweiten Öffnung (54, 55) angeordnet sind und/oder angrenzend an die erste und/oder der zweite Öffnung (54, 55) angeordnet sind.

## Claims

1. Flush-mounted box (1) having at least two retaining elements (11), including
a. a housing (4) having a base (5) and a plurality of side walls (6) laterally adjoining the base (5);
b. wherein the retaining elements (11) protrude laterally from the flush-mounted box (1) and serve to fasten the flush-mounted box (1) in particular to a reinforcement (25); and
c. coupling means (10, 10') for operatively connecting the at least two retaining elements (11) to the flush-mounted box (1); wherein
d. the at least two retaining elements (11) are operatively connected to the housing (4) of the flush-mounted box (1) at two diagonally opposite corners via the coupling means (10, 10'); and
e. the flush-mounted box (1) and the retaining elements (11) have been produced from one or more plastic materials by injection moulding.

2. Flush-mounted box (1) according to Claim 1, **characterized in that** the at least two retaining elements (11) are adjustable in a vertical direction with respect to the flush-mounted box (1).

3. Flush-mounted box (1) according to either of the preceding claims, **characterized in that** the coupling means (10, 10') comprises a dovetail guide.

4. Flush-mounted box (1) according to one of the preceding claims, **characterized in that** the at least two retaining elements (11) are operatively connected to the flush-mounted box (1) via an adapter (17).

5. Flush-mounted box (1) according to one of the preceding claims, **characterized in that** the at least two retaining elements (11) each comprise a fastening means (3, 3', 22), by means of which the retaining elements (11) are able to be fastened to a reinforcement (25).

6. Flush-mounted box (1) according to Claim 5, **characterized in that** the fastening means is a movably arranged lug (3, 3') that is able to be deflected against the force of a spring.

7. Flush-mounted box (1) according to Claim 5, **characterized in that** the fastening means (22) comprises a hinge (23), in particular a snap hinge, such that the fastening means (22) can be snapped back and forth between two stable positions.

8. Flush-mounted box (1) according to one of the preceding claims, **characterized in that** the at least two retaining elements (11) comprise operative-connection means for operatively connecting a further flush-mounted box (1) and/or a further retaining element (11).

9. Flush-mounted box (1) according to one of the preceding claims, **characterized in that** the coupling means (10, 10') also include a spacer, with which the spacing of the retaining element (11) from the top side of the flush-mounted box (1) can be selectively set.

10. Flush-mounted box (1) according to one of the preceding claims, **characterized in that** the flush-mounted box (1) comprises, in at least one side wall (6), a first opening (54), which serves for passing cables into at least one further flush-mounted box (1) that is arranged next to the flush-mounted box (1) and is operatively connected directly or indirectly thereto.

11. Flush-mounted box (1) according to Claim 10, **characterized in that** the first opening (54) is closed by a first cap (48).

12. Flush-mounted box (1) according to Claim 11, **characterized in that** the first cap (48) is integrally formed on the flush-mounted box (1) via at least one thin point (51).

13. Flush-mounted box (1) according to Claim 12, **characterized in that** the at least one thin point (51) is arranged at least regionally in the plane of a side wall (6) of the flush-mounted box (1) or protrudes therefrom.

14. Flush-mounted box (1) according to one of Claims 10 to 13, **characterized in that**, diametrically opposite the first opening (54), a second opening (55) is arranged, which is configured so as to be compatible with the first opening (54).

15. Flush-mounted box (1) according to one of Claims 10 to 14, **characterized in that**, in the region of the first and/or of the second opening, first and second retaining means (29, 30) are arranged, which serve to operatively connect two flush-mounted boxes (1) to one another.

16. Flush-mounted box (1) according to Claim 15, **characterized in that** the retaining means (29, 30) are arranged in the interior of the first and/or of the second opening (54, 55) and/or are arranged in a manner adjoining the first and/or the second opening (54, 55).

## Revendications

1. Boîte encastrée (1) dotée d'au moins deux éléments de retenue (11), comportant
a. un boîtier (4) doté d'un fond (5) et de plusieurs parois latérales (6) se raccordant latéralement au fond (5) ;
b. dans laquelle les éléments de retenue (11) font saillie latéralement à partir de la boîte de branchement encastrée (1) et servent à la fixation de la boîte de branchement encastrée (1) en particulier à une armature (25) ; et
c. des moyens d'accouplement (10, 10') pour la liaison fonctionnelle des au moins deux éléments de retenue (11) à la boîte encastrée (1) ; dans laquelle
d. les au moins deux éléments de retenue (11) sont reliés fonctionnellement au boîtier (4) de la boîte de branchement encastrée (1) par le biais des moyens d'accouplement (10, 10') au niveau de deux coins diagonalement opposés ; et
e. la boîte encastrée (1) et les éléments de retenue (11) sont fabriqués par moulage par injection à partir d'une ou de plusieurs matières synthétiques.

2. Boîte encastrée (1) selon la revendication 1, **caractérisée en ce que** les au moins deux éléments de retenue (11) sont adjustable par rapport à la boîte encastrée (1) dans la direction verticale.

3. Boîte encastrée (1) selon l'une des revendications précédentes, **caractérisée en ce que** le moyen d'accouplement (10, 10') comprend un guide en queue d'aronde.

4. Boîte encastrée (1) selon l'une des revendications précédentes, **caractérisée en ce que** les au moins deux éléments de retenue (11) peuvent être reliés fonctionnellement à la boîte de branchement encastrée (1) par le biais d'un adaptateur (17).

5. Boîte encastrée (1) selon l'une des revendications précédentes, **caractérisée en ce que** les au moins deux éléments de retenue (11) comprennent respectivement un moyen de fixation (3, 3', 22), au moyen desquels les éléments de retenue (11) peuvent être fixés à une armature (25).

6. Boîte encastrée (1) selon la revendication 5, **caractérisée en ce que** le moyen de fixation est une languette (3, 3') disposée de manière mobile, laquelle peut être déviée à l'encontre de la force d'un ressort.

7. Boîte encastrée (1) selon la revendication 5, **caractérisée en ce que** le moyen de fixation (22) comprend une charnière (23), en particulier une charnière à encliquetage, de telle sorte que le moyen de fixation (22) peut être encliqueté en va-et-vient entre deux positions stables.

8. Boîte encastrée (1) selon l'une des revendications précédentes, **caractérisée en ce que** les au moins deux éléments de retenue (11) comprennent des moyens de liaison fonctionnelle pour la liaison fonctionnelle d'une autre boîte de branchement encastrée (1) et/ou d'un autre élément de retenue (11).

9. Boîte encastrée (1) selon l'une des revendications précédentes, **caractérisée en ce que** le moyen d'accouplements (10, 10') comporte en outre une pièce d'écartement à l'aide de laquelle la distance de l'élément de retenue (11) au côté supérieur de la boîte encastrée (1) peut être réglée sélectivement.

10. Boîte encastrée (1) selon l'une des revendications précédentes, **caractérisée en ce que** la boîte encastrée (1) comprend une première ouverture (54) sur au moins une paroi latérale (6), laquelle ouverture sert au passage de câbles dans au moins une autre boîte encastrée (1), laquelle est disposée à côté de la boîte de branchement encastrée (1) et est reliée fonctionnellement à celle-ci directement ou indirectement.

11. Boîte encastrée (1) selon la revendication 10, **caractérisée en ce que** la première ouverture (54) est fermée par un premier couvercle (48).

12. Boîte encastrée (1) selon la revendication (11), **caractérisée en ce que** le premier capuchon (48) est formé à la boîte encastrée par au moins un zone fine (51)

13. Boîte encastrée (1) selon la revendication 12, **caractérisée en ce que** l'au moins un zone fine (51) est disposé, au moins dans certaines zones, dans le plan d'une paroi latérale (6) de la boîte encastrée (1) ou fait saillie à partir de celui-ci.

14. Boîte encastrée (1) selon l'une des revendications 10 à 13, **caractérisée en ce qu'**une deuxième ouverture (55) est disposée de manière diamétralement opposée à la première ouverture (54), laquelle deuxième ouverture est configurée de manière compatible avec la première ouverture (54).

15. Boîte encastrée (1) selon l'une des revendications 10 à 14, **caractérisée en ce que** des premiers et deuxièmes moyens de retenue (29, 30) sont disposés dans la région de la première et/ou de la deuxième ouverture, lesquels servent à la liaison fonctionnelle de deux boîtes encastrées (1) l'une à l'autre.

16. Boîte encastrée (1) selon la revendication 15, **caractérisée en ce que** les moyens de retenue (29, 30) sont disposés à l'intérieur de la première et/ou de la deuxième ouverture (54, 55) et/ou sont disposées de manière adjacente à la première et/ou la deuxième ouverture (54, 55).
